(19)

**Europäisches Patentamt**
**European Patent Office**
**Office européen des brevets**

(11) **EP 1 372 896 B1**

(12) **EUROPEAN PATENT SPECIFICATION**

(45) Date of publication and mention
of the grant of the patent:
**24.09.2008 Bulletin 2008/39**

(51) Int Cl.:
***B23K 9/095*** (2006.01)

(21) Application number: **02720700.0**

(86) International application number:
**PCT/SE2002/000648**

(22) Date of filing: **28.03.2002**

(87) International publication number:
**WO 2002/078891 (10.10.2002 Gazette 2002/41)**

(54) **AN ARC WELDING METHOD**

LICHTBOGENSCHWEISSVERFAHREN

PROCEDE DE SOUDAGE A L'ARC

(84) Designated Contracting States:
**AT BE CH CY DE DK ES FI FR GB GR IE IT LI LU MC NL PT SE TR**

(30) Priority: **02.04.2001 SE 0101163**

(43) Date of publication of application:
**02.01.2004 Bulletin 2004/01**

(73) Proprietor: **ABB AB**
**721 83 Västerås (SE)**

(72) Inventors:
• **KADDANI, Ahmed**
**S-723 41 Västerås (SE)**
• **WINDECKER, Ulrike**
**S-722 46 Västerås (SE)**

• **SKARIN, Dick**
**S-632 36 Eskilstuna (SE)**
• **LEMARINIER, Pavel**
**S-723 45 Västerås (SE)**
• **ZAHRAI, Said**
**S-723 41 Västerås (SE)**
• **GU, Chun-Yuan**
**S-722 46 Västerås (SE)**

(74) Representative: **Dahlstrand, Björn**
**ABB AB**
**Legal & Compliance/Intellectual Property**
**721 78 Västeras (SE)**

(56) References cited:
**EP-A1- 0 930 125     WO-A1-01/02125**
**US-A- 6 133 545**

**Description**

FIELD OF THE INVENTION AND PRIOR ART

The present invention relates to a method for controlling an arc welding equipment used in a welding operation and adjustable by varying at least one welding parameter value, which method comprises the steps of: determining said at least one welding parameter value while using a theoretical model of the welding process associated with the welding operation and controlling the operation of the welding equipment and the welding process associated therewith by using said at least one welding parameter value for adjusting the welding equipment, to a method for simulating an arc welding process which method comprises the steps of: inputting data into a theoretical model representing the welding process and determining at least one welding parameter value of the welding process while using the theoretical model and the data input, with the purpose to simulate the welding process, and to a method for predicting the quality of a weld obtained from an arc welding operation which method comprises the steps of: inputting data into a theoretical model representing the welding process associated with the welding operation and determining at least one property of the weld related to at least one welding parameter of the welding process while using the theoretical model and the data input.

The invention also relates to a device comprising an arc welding equipment used in a welding operation and adjustable by varying at least one welding parameter and an arrangement for controlling the operation of the arc welding equipment, said control arrangement including a means adapted to determine the value of said at least one welding parameter while using a theoretical model of the welding process, and a member adapted to control the operation of the welding equipment and the welding process associated therewith by using said at least one welding parameter for adjusting the welding equipment.

Furthermore, the invention relates to uses of the methods and to computer program products according to claims enclosed.

When work pieces are joined by arc welding the quality of the welded joints is strongly dependent upon the parameters set during the arc welding operation. Examples of these welding parameters are welding current, supply voltage, type of shielding gas, shielding gas flow rate, welding speed, torch angle, electrode (wire) extension, wire feed rate, and other properties of the wire and of the work piece, such as dimensions and materials. These welding parameters interact with each other in the welding process in a complex manner and influence the properties, i.e. the geometry or type of weld, metallurgy and the mechanical strength of the weld resulting from the welding operation. More precisely, the quality of a weld joint depends strongly on the metal transfer mode present during the welding. In other words, the way metal is transferred from the wire tip (for example the anode) to the work piece (for example the cathode) during the welding has a very strong effect on the final properties and the quality of the weld joint.

There is of course a need to know how different sets of the adjustable parameters will effect the properties of the weld joint, so that the parameters may be adjusted in a way resulting in the weld desired. One way is to attempt to predict the metal transfer mode based on the knowledge about the influence of the different parameters. However, according to the state of art the metal transfer mode is mainly determined through empirical methods. The metal transfer mode may be identified through the noise generated by the welding process by people with a very long experience in arc welding. Inspection of the weld joint after finishing the welding operation may also give clues to which metal transfer mode that was present during the welding operation. Thus, at present, the settings of important welding process parameters used in robotic arc welding are found out experimentally by trial and error for every single welding task or welding condition, which is both time consuming and costly. For example, in case of using parameters resulting in an undesired metal transfer mode the welded joint may be of a poor quality and the work piece may be destroyed.

One reason to the lack of knowledge about how the welding parameters effect the welding process in general, and particularly the arc, and about the relations between the welding parameters used and the quality of the weld joint, is the difficulty in making measurements of the arc, or in the vicinity of the arc, and in the near to arc regions close to the wire and the work piece. Thus, as an undesired consequence it is very difficult to design a control system based upon direct measurements of the arc parameters for controlling an arc welding equipment. The fact is that automated or robotic arc welding are used in quite few of the arc welding application performed throughout the world today, since the difficulty in predicting the result of the welding operation and the properties of welding process associated thereto for a given set of welding parameters, together with proportionately small series of work pieces, makes it more cost efficient to perform the work manually by workers skilled in welding.

The document EP0930125 teaches a method and apparatus provided for determining the duty cycle, average amperage, and/or the number of arc starts during a welding operation. The apparatus comprises first and second circuits, the first circuit being a CPU control circuit, and the second circuit being an arc time sensor circuit which is programmed to measure amperage, welding wire feed speed and preferably gas flow rates while welding. A ratio of the cumulative welding time during the audit to the total on-time provides a measurement of the efficiency of the welding arc. The welding deposition efficiency may then be calculated using the average amperage and welding duty cycle as measured and calculated by the apparatus. The number of arc starts where the arc on-time is in excess of one second may also provide a useable measurement in giving secondary information on the overall efficiency of the welding operation.

The document WO0102125 teaches an apparatus (10) for determining a quality of a weld produced by a welding device (12) according to the present invention may comprise a sensor (16, 18, or 20) operatively associated with the welding device (12) for sensing at least one welding process parameter during a welding process and for producing a welding process parameter signal related to the welding process parameter. A computer (26) connected to the sensor (16, 18, or 20) and responsive to the welding process parameter signal produced by the sensor (16, 18, or 20) compares the welding process parameter signal with a baseline parameter and produces an output signal (40) indicative of whether the welding process parameter signal is compliant with the baseline parameter.

The document US6133545 teaches a measured welding event reproduced by a welding robot. Welding events are organized into a database by a three-dimensional measuring device and a data logging device, and the welding events are subjected to statistical and analytical processes, thereby producing operation data of a robot.

SUMMARY OF THE INVENTION

A first object of the invention is to provide a method for controlling an arc welding equipment, which method enabling that the arc welding equipment may be controlled during a welding operation by adjusting at least one welding parameter determined without the need of measurements of the welding process or repeated welding experiments prior to welding.

The first object is obtained according to the invention by providing such a method, referred to in the introduction, which comprises the steps of:

- dividing the welding process into at least two separate parts, of which at least one part represents the arc or a portion thereof, in the theoretical model,
- representing each of said at least two welding process parts and the welding parameter/parameters associated therewith by a model component,
- putting the model components and a model power source in an electric circuit model, and
- calculating at least one electric circuit model parameter related to said at least one welding parameter from the electric circuit model.

By such a method it is possible to determine at least one welding parameter value, such as the welding current or voltage supply, wire feed rate, wire extension etc., and to use this welding parameter value for controlling the arc welding equipment in accordance with the present conditions to obtain a weld with the properties desired.

A second object of the invention is to provide a method for simulating an arc welding process without the need of measurements of the corresponding real welding process or repeated welding experiments.

The second object is obtained according to the invention by providing such a method, referred to in the introduction, which comprises the steps of:

- dividing the welding process into at least two separate parts, of which at least one part represents the arc or a portion thereof, in the theoretical model,
- representing each of said at least two welding process parts and the welding parameter/parameters associated therewith by a model component,
- putting the model components and a model power source in an electric circuit model, and
- calculating at least one electric circuit model parameter related to said at least one welding parameter from the electric circuit model.

By this simulation method it is possible to obtain at least one welding parameter value, and/or the present metal transfer mode, for a given set of other welding parameters in the simulation, and for example this simulation method may be used for understanding and designing of real welding processes and for default setting of welding parameters of arc welding equipment in different arc welding operations.

A third object of the invention is to provide a method for predicting the quality of a weld obtained from an arc welding operation without the need of repeated welding experiments.

The third object is obtained according to the invention by providing such a method, referred to in the introduction, which comprises the steps of:

- dividing the welding process into at least two separate parts, of which at least one part represents the arc or a portion thereof, in the theoretical model,
- representing each of said at least two welding process parts and the welding parameter/parameters associated therewith by a model component,

- putting the model components and a model power source in an electric circuit model, and
- calculating at least one electric circuit model parameter related to said at least one welding parameter, and related to said at least one property of the weld, from the electric circuit model.

By such a method it is possible to predict one or more mechanical properties of a weld resulting from an arc welding operation by determining one or more welding parameters required for the quality desired and use this information in real arc welding operations. It is possible to use the method for predicting the quality of a weld for a given set of welding parameters as well as for determining one or more welding parameters required for obtaining certain mechanical properties of the weld.

According to a preferred embodiment of the invention one or more of said methods comprise the step of:

- dividing the welding process so that the arc-wire interaction region part of the welding process is separately represented by one of said model components in the electric circuit model. By such a method, together with a suitable physical model, important information is obtained because it is possible to take important factors in the welding process, such as the voltage drop over the region near to anode and the heat flux from arc to anode, into consideration in determining said at least one welding parameter value. In the arc-wire interaction region of the welding process, high gradients of different quantities such as temperature and concentration of particles are present, and the voltage drop in this region is very high. Thus, this region gives an important contribution to the characteristics of the welding process.

According to another preferred embodiment of the invention one or more of said methods comprise the step of:

- dividing the welding process so that the arc-work piece interaction region part of the welding process is separately represented by one of said model components in the electric circuit model. By such a method, together with a suitable physical model, important information is obtained because it is possible to take important factors in the welding process, such as the voltage drop over the region near to cathode and the heat flux from arc to cathode, into consideration in determining said at least one welding parameter value. In the arc-work piece interaction region of the welding process, high gradients of different quantities such as temperature and concentration of particles are present, and the voltage drop in this region is very high. Thus, this region gives an important contribution to the characteristics of the welding process.

According to another preferred embodiment of the invention one or more of said methods comprise the step of:

- dividing the welding process so that the arc region part of the welding process is separately represented by one of said model components in the electric circuit model. By such a method, and particularly together with an embodiment comprising the step of:
- determining said model component representing the arc region part by means of information obtained through calculations from a physical model of the arc column region part of the welding process, important information is obtained such as arc mean temperature, temperature near to the wire, temperature near to the work piece, arc radius and arc current-voltage characteristics, and it is also possible to take the thermophysical properties of a shielding gas present in the arc region into consideration in determining said at least one welding parameter value. According to another preferred embodiment of the invention one or more of said methods comprise the step of:
- determining said model component representing the arc region part by means of information obtained through calculations from a physical model of the arc-wire interaction region part and/or of the arc-work piece interaction region part of the welding process, important information is obtained because it is possible to take important factors in the welding process, such as the voltage drop over the region near to anode/cathode and the heat flux from arc to anode/cathode, into consideration in determining said at least one welding parameter value. In the arc-wire interaction region and in the arc-work piece interaction region of the welding process, high gradients of different quantities such as temperature and concentration of particles are present, and the voltage drop in these regions is very high. Thus, these regions give an important contribution to the characteristics of the welding process.

According to another preferred embodiment of the invention one or more of said methods comprise the step of:

- determining said model component representing the arc region part by means of said physical model describing the arc by at least one equation independent of the extension in space of the arc. By such a method, and particularly together with an embodiment comprising the step of:

- determining said model component representing the arc region part by means of said physical model describing the are by said at least one equation only dependent on the time, the model component and thus said at least one welding parameter value, may be determined fast and with proportionally short computational time, which makes the method suitable to be used for example in controlling an arc welding equipment on line.

According to another preferred embodiment of the invention one or more of said methods comprise the step of:

- dividing the welding process so that the arc column region part of the welding process is separately represented by one of said model components in the electric circuit model. By such a method, together with a suitable physical model, important information is obtained such as arc mean temperature, temperature near to the wire, temperature near to the work piece, arc radius and arc current-voltage characteristics, and it is also possible to take the thermo-physical properties of a shielding gas present in the arc column region into consideration in determining said at least one welding parameter.

According to another preferred embodiment of the invention said methods comprise the step of:

- dividing the welding process so that the wire part of the welding process is separately represented by one of said model components in the electric circuit model. By such a method, together with a suitable physical model, important information is obtained such as metal transfer mode, dipping frequency etc, and it is also possible to take material properties of the wire into consideration in determining the value of said at least one welding parameter.

According to another preferred embodiment of the invention said methods comprise the step of:

- dividing the welding process so that the work piece part of the welding process is separately represented by one of said model components in the electric circuit model. By such a method, together with a suitable physical model, important information is obtained about quality features such as weld joint profile, penetration profile etc, and it is also possible to take material properties of the work piece into consideration in determining the value of said at least one welding parameter.

A fourth object of the invention is to provide a device which has an arrangement for controlling the arc welding equipment during a welding operation by adjusting at least one welding parameter determined without the need of measurements of the welding process or repeated welding experiments prior to welding.
The fourth object is obtained according to the invention by providing such a device, referred to in the introduction, in which the means included in the control arrangement is adapted to use said theoretical model comprising at least two separate parts, of which at least one part represents the arc or a portion thereof, corresponding to different parts of the welding process, each model part being represented by a model component, said model components together with a model power source being included in an electric circuit model, and adapted to calculate at least one electric circuit model parameter related to said at least one welding parameter from the electric circuit model for said control by said member. Thus, by the means according to the invention it is possible to determine how to set at least one welding parameter value, such as the welding current or supply voltage, wire feed rate, wire extension etc., with the purpose of optimizing the welding process under the present conditions, and use this welding parameter value by said member for adjusting the arc welding equipment in accordance with the present conditions to obtain a weld with the properties desired.
According to a preferred embodiment of the invention said means is adapted to use said theoretical model having the arc-wire interaction region part of the welding process separately represented by one of said model components in the electric circuit model. By such a device, together with a suitable physical model, important information is obtained because it is possible to take important factors in the welding process, such as the voltage drop over the region near to anode and the heat flux from arc to anode, into consideration in determining said at least one welding parameter value. In the arc-wire interaction region of the welding process, high gradients of different quantities such as temperature and concentration of particles are present, and the voltage drop in this region is very high. Thus, this region give an important contribution to the characteristics of the welding process.
According to another preferred embodiment of the invention said means is adapted to use said theoretical model having the arc-work piece interaction region part of the welding process separately represented by one of said model components in the electric circuit model. By such a device, together with a suitable physical model, important information is obtained because it is possible to take important factors in the welding process, such as the voltage drop over the region near to cathode and the heat flux from arc to cathode, into consideration in determining said at least one welding parameter value. In the arc-work piece interaction region of the welding process, high gradients of different quantities such as temperature and concentration of particles are present, and the voltage drop in this region is very high. Thus, this region gives an important contribution to the characteristics of the welding process.
According to another preferred embodiment of the invention said means is adapted to use said theoretical model having the arc region part of the welding process separately represented by one of said model components in the electric circuit model. By such a device, and particularly together with an embodiment of the invention in which the means is adapted to use said theoretical model having information obtained through calculations from a physical model of the arc column region part of the welding process to be used in determining said model component representing the arc region part, important information is obtained such as arc mean temperature, temperature near to wire, temperature near to work piece, arc radius and arc current-voltage characteristics, and it is also possible to take the thermo-physical properties of a shielding gas present in the arc region into consideration in determining said at least one welding parameter. According to another preferred embodiment of the invention said means is adapted to use said theoretical model having information obtained through calculations from a physical model of the arc-wire interaction region part and/or of the arc-work piece interaction region part of the welding process to be used in determining said model component representing the arc region part, important information is obtained because it is possible to take important factors in the welding process, such as the voltage drop over the region near to anode/cathode and the heat flux from arc to anode/cathode, into consideration in determining said at least one welding parameter value. In the arc-wire interaction region and in the arc-work piece interaction region of the welding process, high gradients of different quantities such as temperature and concentration of particles are present, and the voltage drop in these regions is very high. Thus, these regions give an important contribution to the characteristics of the welding process.

According to another preferred embodiment of the invention in which said means is adapted to use said model component determined by means of said physical model describing the arc by at least one equation independent of the extension in space of the arc, and particularly together with an embodiment of the invention in which said means is adapted to use said model component determined by means of said physical model describing the arc by said at least one equation only dependent on the time, the model component and thus said at least one welding parameter value, may be determined fast and with proportionally short computational time, which makes the device very suitable to be used in controlling the are welding equipment on line.

According to another preferred embodiment of the invention said means is adapted to use said theoretical model having the arc column region part of the welding process separately represented by one of said model components in the electric circuit model. By such a device, together with a suitable physical model, important information is obtained such as arc mean temperature, temperature near to wire, temperature near to work piece, arc radius and are current-voltage characteristics, and it is also possible to take the thermo-physical properties of a shielding gas present in the arc column region into consideration in determining said at least one welding parameter.

According to another preferred embodiment of the invention said means is adapted to use said theoretical model having the wire part of the welding process separately represented by one of said model components. By such a device, together with a suitable physical model, important information is obtained such as metal transfer mode, dipping frequency etc, and it is also possible to take material properties of the wire into consideration in determining the value of said at least one welding parameter.

According to another preferred embodiment of the invention said means is adapted to use said theoretical model having the work piece part of the welding process separately represented by one of said model components. By such a device, together with a suitable physical model, important information is obtained about quality features such as weld joint profile, penetration profile etc, and it is also possible to take material properties of the work piece into consideration in determining the value of said at least one welding parameter.

The invention also relates to computer program products according to the claims enclosed. It is obvious that the methods according to the invention defined in the sets of method claims enclosed are well suited to be performed through program instructions from a processor which may be effected by a computer program.

Further advantages of and features of the methods and the device, the computer program products, and the uses of the methods appear from the following detailed description and the other claims enclosed herein.

BRIEF DESCRIPTION OF THE DRAWINGS

With reference to the appended drawings, below follows a description of preferred embodiments of the invention cited as examples.

In the drawings:

Fig 1 is a schematic illustration of an arc welding process,

Fig 2 is a schematic illustration of the voltage distribution in the gap between a wire and a work piece in an arc welding operation,

Fig 3 is an illustration of an electric circuit model representing an arc welding process,

Fig 4 is a schematic illustration of a device according to the invention and of applications of the invention,

Fig 5 is a block diagram of a method according to the invention,

Fig 6 is a block diagram of another method according to the invention,

Fig 7 is a block diagram of another method according to the invention,

Fig 8 is a schematic illustration of a physical model of the arc,

Fig 9 is an illustration of the geometry of an arc defined in a physical model,

Fig 10 is an illustration of a physical model of the are wire interaction region in an arc welding process,

Fig 11 is an illustration of a physical model of the arc-work piece interaction region in an arc welding process,

Fig 12 is an illustration of the energy balance in the ionization zone,

Fig 13 shows different kinds of welding parameters,

Fig 14 is a schematic definition for work piece modelling of a horizontal-vertical fillet joint produced by gas metal arc welding,

Fig 15 shows an example of a non-linear regression model, and

Figs 16 and 17 are analytic models of work piece.

DETAILED DESCRIPTION OF PREFERRED EMBODIMENTS OF THE INVENTION

In this application the wording "welding process" is used as a generic term of the main parts included in an arc welding operation and of the physical processes associated therewith which take place when an electric arc is generated between a wire (anode) and a work piece (cathode).

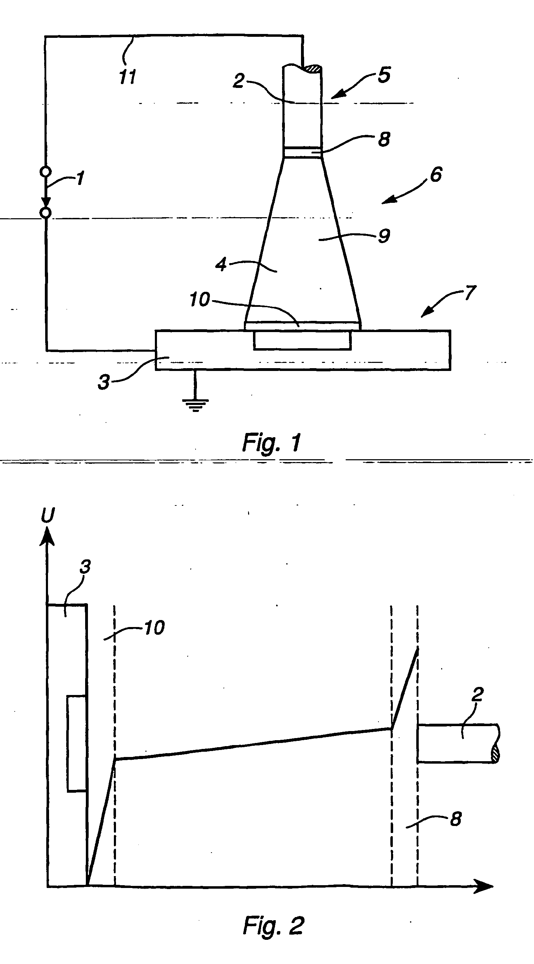

In Fig 1 an arc welding process is schematically illustrated. The power source 1 is connected to a wire 2 and a work piece 3 to create a closed electric circuit by means of an arc 4 generated in the gap between the wire 2 and the work piece 3 with the purpose of transferring material from the wire 2 to the work piece 3.

The welding process may be divided in the following main parts: wire part 5, are region part 6 and work piece part 7. Furthermore, the arc region part 6 may be divided in subparts, namely an arc-wire interaction region part 8, an arc column region part 9 and an arc-work piece interaction region part 10. All these parts contribute to the characteristics of the welding process and to a certain voltage drop in the electric circuit.

However, in the electrode regions, i.e. in the arc-wire interaction region part 8 and the arc-work piece interaction region part 10 of the welding process, the voltage drop is very high compared to the voltage drop in the central part of the arc, i.e. in the arc column region part 9. In Fig 2 the voltage distribution along the arc, or in other words in the gap between the wire 2 and the work piece 3, is schematically illustrated. It is indicated that the voltage drops highly in the regions near to the wire and near to the work piece. This means that the regions situated near to the wire and near to the work piece are important parts in the welding process and have strong influence on the weld joint resulting from the welding operation.

Furthermore, the voltage distribution in the gap is very difficult to determine by direct measuring of the arc whereas the voltage drops due to the resistances and inductances of the conduits 11 in the circuit and of the power source 1 itself are easily determined by conventional measurements. Thus, there is a need of a physical model for describing the phenomena of the arc to predict the behaviour of the welding process. However, as already indicated the wire 2 and work piece 3 strongly interact with the are 4 an influence the welding process. Thus, good physical models of these parts are also needed to describe the welding process in its entirety.

The main idea of the invention is to obtain the value of at least one welding parameter by means of a theoretical model and use said at least one welding parameter in operating an arc welding equipment and/or in simulating an arc welding process and/or in predicting the quality of a weld obtained from an are welding operation. This performed by dividing the welding process into parts in a theoretical model and letting each of these welding process parts and the welding parameters associated therewith be represented by a model component. The components are then put in an electric circuit model together with a model power source with the purpose of calculating at least one electric circuit model parameter related to said at least one welding parameter from the electric circuit model. The components may be resistive and/or inductive components, but also other electric elements than pure resistors and inductors may be included in the electric circuit model. Furthermore, the model components may be connected in series and/or in parallel.

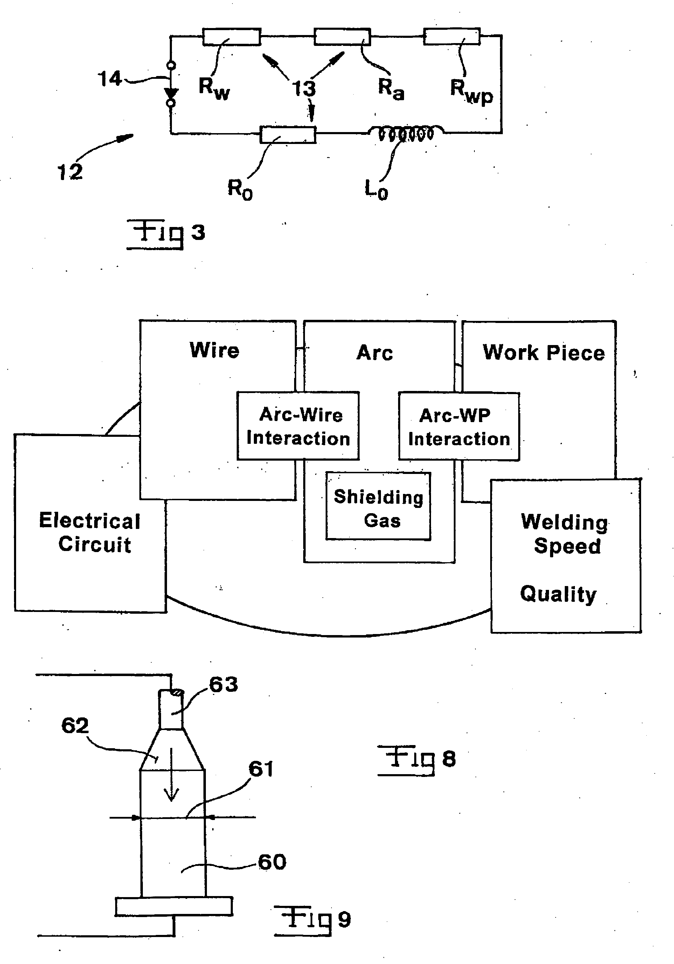

In Fig 3 an example of an electric circuit model 12 including model components 13 and a model power source 14 is illustrated. In this electric circuit model 12 the wire part 5 is represented by a resistor, $R_w$, the work piece part 7 by a resistor, $R_{wp}$, and the arc part 6 is represented by a resistor, $R_a$. In addition to these resistances it is necessary to define a model resistance $R_0$ and a model inductance $L_0$ corresponding to the resistance and the inductance from the power source 1 itself and the cables 11 in the real welding circuit. The circuit model resistance $R_0$ and the inductance $L_0$ are well known properties, or may be chosen, and for the simplification below these are treated as a single component $(RL)_{rest}$. (In this component also other resistances, such as a contact resistance between the wire and a nozzle holding the wire, may be included).

Although the electric circuit model 12 illustrated in Fig 3 comprises four separate components: $R_w$, $R_{wp}$, $R_a$ and $(RL)_{rest}$, in accordance with the invention the welding process may be divided into two or more parts, but at least two separate parts, of which at least one part represents the arc or a portion thereof present in the welding process. In the case of two separate model components 13 all resistances in the circuit, with the exception of the resistance $R_a$ from the are region part 6, are suitably included in $(RL)_{rest}$. Of course higher dissolution, i.e. more model components 13 representing different parts in the welding process, gives a more precise description of the are welding process and also the possibility to obtain information about more welding parameters and to take more characteristics of the welding process into consideration.

However, it is also possible to use different physical models representing subparts of a part of the welding process, the are region part 6 for instance, which are based on the different characteristics of the part in different regions, for example the arc-wire interaction region 8, the arc column region 9 and/or the arc-work piece interaction region 10, resulting in one common model component such as a resistance $R_a$. In this way different parts of the welding process may be described without using a separate model component 13 for each part. In addition it is also possible to use input values from other parts of the welding process when the model component is calculated.

By using Kirchoff's Voltage Laws at least one electric circuit model parameter may be calculated from the electric circuit model 12. For example, if the voltage supply 14 and the other components 13 are known, the current may be calculated or vice versa for a given current an unknown model component may be calculated. The model components $R_w$, $R_a$ and $R_{wp}$ in figure 3 and other such components may be calculated from one or more of the physical models of the wire, arc and the work piece and of their interaction with each other. Below, examples of physical models are given.

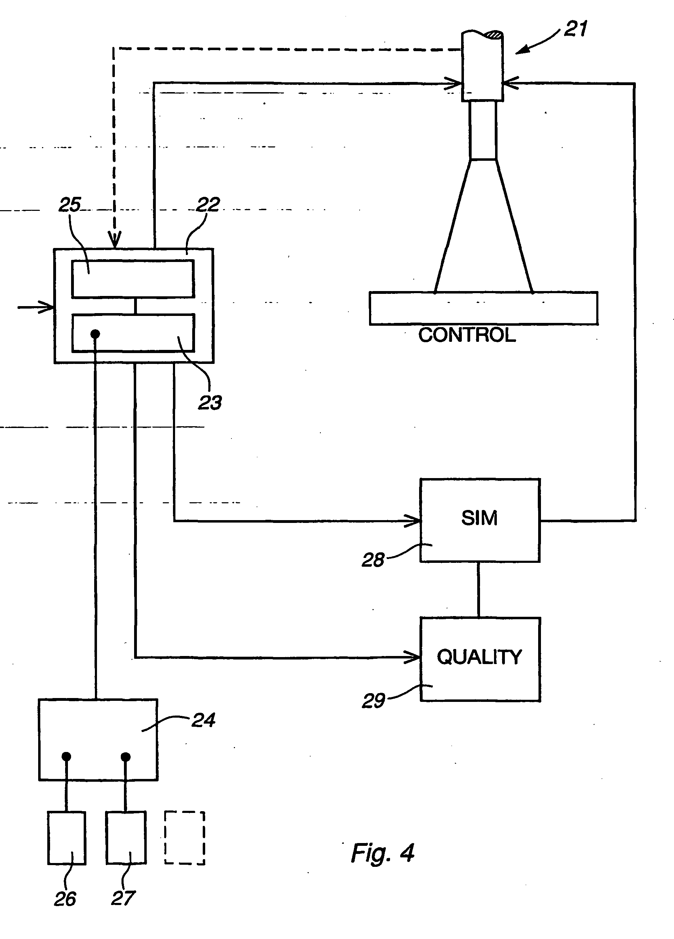

In Fig 4 the invention and some of its applications are schematically illustrated. The device according to the invention comprises an arc welding equipment 21 to be used in a welding operation for creating a weld joint. The welding equipment 21 are suitably an automated or robotic arc welding equipment which may be adjusted by varying at least one welding parameter, such as supply voltage, shielding gas flow rate, welding speed, torque angle, wire extension, wire feed rate etc. Furthermore, the device includes an arrangement 22 for controlling the operation of the arc welding equipment 21. The control arrangement 22 comprises a means 23, for example a processor and computer programs and electric components/circuits thereto, adapted to determine the value of said at least one welding parameter while using a theoretical model 24 of the welding process, and a member 25, for example any kind of control equipment which is able to communicate with the welding equipment and said means and thus transfer a signal representing the welding parameter value to the welding equipment, for adjusting the welding equipment 21. The adjustment may be performed prior to welding and/or on line during the welding. The means 23 is adapted to use said theoretical model 24, which comprises at least two separated parts 26, 27, of which at least one part represents the arc or portion thereof, corresponding to different parts of the welding process. Each model part 26, 27 is represented by a model component 13, see also Fig 3, and these model components 13 together with the model power source 14 are included in the electric circuit model 12. The means 23 is adapted to calculate at least one electric circuit model parameter 13 from the electric circuit model 12, and to use the value of this parameter related to said at least one welding parameter, for said control of the welding equipment 21 through adjusting of said at least one welding parameter of the welding process by said member 25.

As indicated in Fig 4 the means 23 may be used without the member 25 and the arc welding equipment 21 for other purposes than direct controlling of an arc welding equipment. Thus, such a means may be used for simulation 28 of any arc welding process and/or for prediction of the quality 29 of a weld resulting from an arc welding operation.

Furthermore, said means 23 and/or the control arrangement 22 may be used in performing any of the methods described herein.

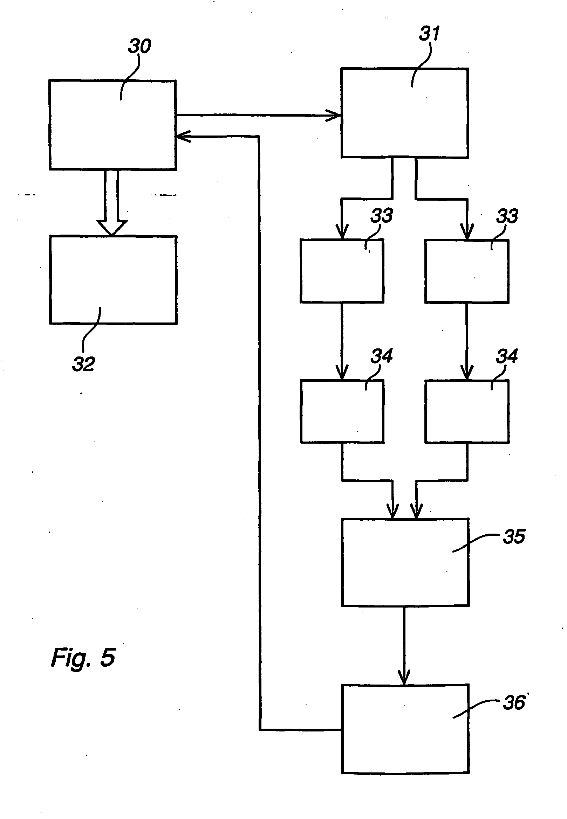

In Fig 5 a block diagram of the method for controlling an are welding equipment used in a welding operation and adjustable by varying at least one welding parameter value is illustrated. The method comprises the steps of determining 30 said at least one welding parameter value while using 31 a theoretical model of the welding process associated with the welding operation, controlling 32 the operation of the welding equipment and the welding process associated therewith by using said at least one welding parameter value for adjusting the welding equipment, where the determining comprises the steps of dividing 33 the welding process into at least two separate parts, of which at least one part represents the arc or a portion thereof, in the theoretical model, representing 34 each of said at least two welding process parts and the welding parameter/parameters associated therewith be by a model component, putting 35 the model components and the model power source in an electric circuit model, and calculating 36 at least one electric circuit model parameter related to said at least one welding parameter from the electric circuit model.

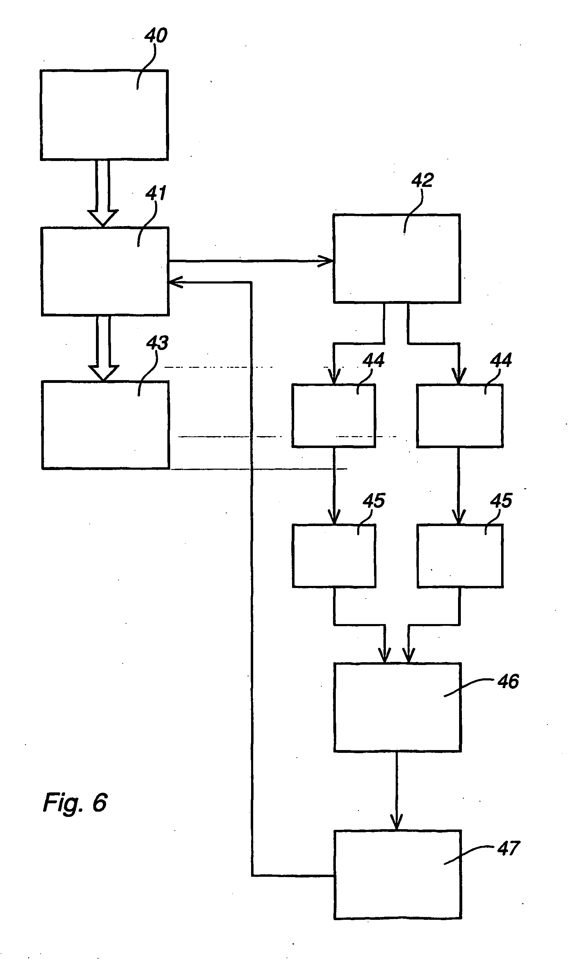

In Fig 6 a block diagram of the method for simulating an arc welding process is illustrate. The method comprises the steps of inputting 40 data into a theoretical model representing the welding process, determining 41 at least one welding parameter value of the welding process while using 42 the theoretical model and the data input, with the purpose to simulate 43 the welding process, where the determining comprises the steps of dividing 44 the welding process into at least two separate parts, of which at least one part represents the arc or a portion thereof, in the theoretical model, representing 45 each of said at least two welding process parts and the welding parameter/parameters associated therewith by a model component, putting 46 the model components and a model power source in an electric circuit model, and calculating 47 at least one electric circuit model parameter related to said at least one welding parameter from the electric circuit model.

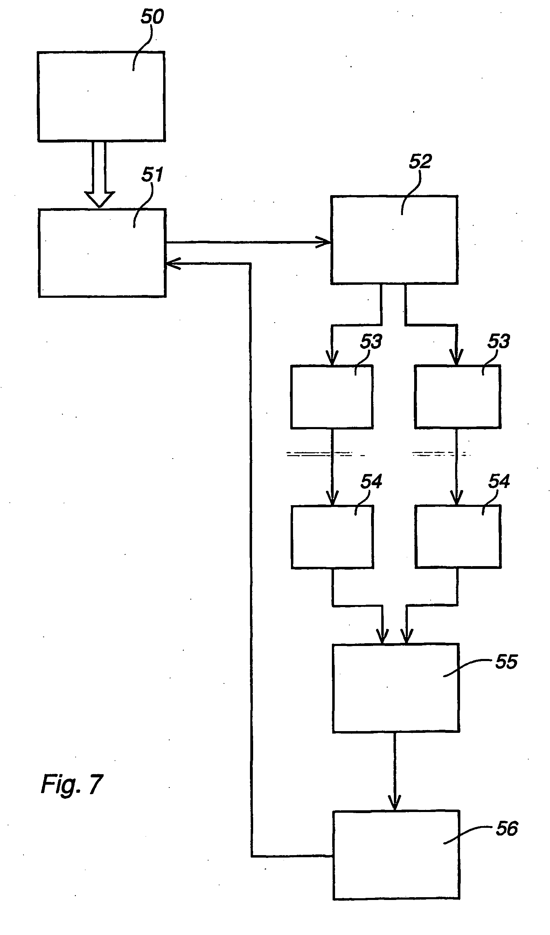

In Fig 7 a block diagram of the method for predicting the quality of a weld obtained from an arc welding operation is illustrated. The method comprises the steps of inputting 50 data into a theoretical model representing the welding process associated with the welding operation, determining 51 at least one property of the weld related to at least one welding parameter value of the welding process while using 52 the theoretical model and the data input, where the determining comprises the steps of dividing 53 the welding process into at least two separate parts, of which at least one part represents the arc or a portion thereof, in the theoretical model, representing 54 each of said at least two welding process parts and the welding parameter/parameters associated therewith be represented by a model, component, putting 55 the model components and the model power source in an electric circuit model, and calculating 56 at least one electric circuit model parameter related to said at least one welding parameter, and related to said at least one property of the weld, from the electric circuit model.

The methods may be used for different objects such as for predicting the metal droplet formation in an arc welding operation for a given set of welding parameters, for predicting the metal transfer mode in an arc welding operation for a given set of welding parameters, for calculating at least one welding parameter value required for obtaining a particular metal transfer mode in a welding operation and/or for calculating at least one default setting value to be used for adjusting an automatic arc welding equipment prior to welding. The prediction of quality may be used for example for prediction of any mechanical property of a weld joint for a given inputs, i.e. set of welding parameters, or in the reverse direction for determining one or more welding parameter values for a given input, i.e. any mechanical property of a weld joint. An important application of the methods and the device according to the invention is the prediction of the characteristics of a certain welding process, and as mentioned above the prediction of the metal transfer mode present during an arc welding operation, which makes it possible to predict the transfer mode as a function of a certain welding parameter, such as wire feed speed or current, and thus to predict the transition region between so called short arc and spray arc mode.

In different embodiments of the methods the step of dividing the welding process may include dividing of the welding process so that the arc-wire interaction region part and/or the arc region part and/or the arc column region part and/or the wire part and/or the work piece part is separately represented by one of said model components 13 in the electric circuit model 12. In embodiments of the methods using an electric circuit model 12 according to Fig 3 said methods comprise the steps of dividing the welding process so that the arc region part 6, the wire part 5, the work piece part 7 (and the part corresponding to $(RL)_{rest}$) each is separately represented by one of said model components 13 in the electric circuit model 12.

Furthermore, in a preferred embodiment described more in detail below, said model component, $R_a$, representing the arc region part is determined by means of information obtained through calculation from physical models of the arc column region part 9, the arc-wire interaction region part 8, and the arc-work piece interaction region part 10.

In Figs 8, 9, 10 and 11 an example of a physical model, including submodels, based on energy, mass and momentum equations is schematically illustrated. As indicated in Fig 8 the wire, the are, the work piece, the arc-wire interaction and the arc-work piece interaction are taken into account.

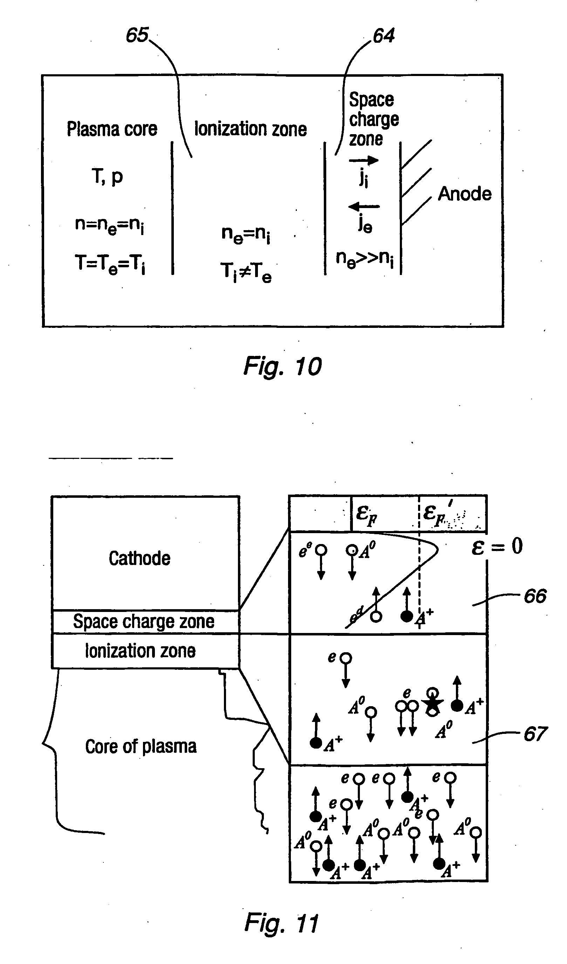

In Fig 9 the are column 60F is assumed to be a cylindric conductor with a mean diameter 61 and an are expansion transition zone 62 near to the wire 63. In Fig 10 the arc-wire interaction region part of the welding process is divided into a first zone 64 nearest to the wire, called the space charge zone, and a second zone 65 nearest to the arc column, called the ionization zone, for describing the properties of the zones through different physical submodels. Also the arc-work piece interaction region part of the welding process in Fig 11 is divided into a first zone 66 nearest to the work piece, called space charge zone, and a second zone 67 nearest to the arc column, called the ionization zone, for describing the properties of the zones through different physical submodels. Below follows a more detailed description of possible physical models which may be used in connection with the invention.

PHYSICAL MODELS

**Arc model**

As already mentioned the welding process may be divided into different parts and the arc region part may be divided in subparts, namely an arc-wire interaction region part, an arc column region part and an arc-work piece interaction region part. The arc column, described in this chapter, occupies most of the space between the wire and the work piece. In this region, gradients of thermodynamic variables, such as temperature and pressure, are not too high and the system is in local thermodynamic equilibrium.

The arc model suggested here is based on energy, mass and momentum equations. The arc current generates Lorentz forces which have an important role in the welding process. The arc is usually constricted towards the wire tip. This rises the axial component of the Lorentz force. Plasma is therefore accelerated towards the work piece. The electromagnetic forces in the welding process are important both for the stabilization of the arc and for material transfer to the work piece. To be able to predict some phenomena of welding arcs, thermo-physical properties of shielding gas in the temperature range 300-30000 Kelvin are required. Due to arc-wire and arc-work piece interactions, the shielding gas is usually contaminated by metallic vapours, which strongly influence the physical properties of the arc.

The structure for the arc model proposed herein is shown in Figure 8. This structure gives the possibility to consider the effects of the shielding gas, the wire material and the work piece material.

According to the state of art, a detailed two-dimensional simulation of the arc is known today. However, such a simulation requires long computational time. This makes it difficult to use such a tool for controlling and monitoring the arc welding process.

In this application instead a fast arc model with the structure illustrated in, Figure 8 and 9 is proposed. The model is based upon the following considerations:

- the arc is in local thermodynamic equilibrium,

- the arc is assumed to be a cylindrical conductor with a uniform temperature and a mean diameter,

- an arc expansion transition zone between the wire and the arc column is considered,

- the arc mean temperature and diameter are obtained from the arc energy balance and the Steenbeck minimum principle. This principle is based on the minimization of the are power loss,

- thermo-physical properties are calculated in-separate modules and coupled to the arc model, and

- the arc-wire interaction and the arc-work piece interaction are taken into account.

The energy balance of the arc is given below:

$$\underbrace{\frac{LI^2}{\sigma A}}_{\substack{\text{dissipation in}\\\text{arc column}}} + \underbrace{(V_{an}+V_{ca})I}_{\substack{\text{dissipation due to}\\\text{anode and cathode falls}}} = \underbrace{A\rho v(h-h_0)}_{\text{convection}} + \underbrace{ALU_{rad}}_{\text{radiation}} + \underbrace{Q_{A\text{-}A}}_{\substack{\text{Heat transfer Arc-Anode}}} + \underbrace{Q_{A\text{-}C}}_{\substack{\text{Heat transfer Arc-Cathode}}}$$

where L is the arc length, I denotes the electric current, σ refers to the electric conductivity, A is the cross section area of the arc column, $V_{an}$ and $V_{ca}$ are the voltage drops in the near to anode (wire) region and in the near to cathode (work piece) region, respectively. ρ is the gas density, h and $h_0$ are the specific enthalpies of the arc and the surroundings, and $U_{rad}$ is the mean radiation density, which all are functions of the arc temperature. v denotes the mean gas velocity. The heat transfer terms for are-anode $Q_{A\text{-}A}$ and arc-cathode $Q_{A\text{-}C}$ are obtained from detailed physical models of the arc-cathode and arc-anode interactions.

Using Ampere's law and integration of Navier-Stokes equations for an incompressible flow in the expansion zone a simple equation for the mean velocity can be deduced as

$$v = C_a \frac{1}{\pi R_{Arc}} \sqrt{\frac{C_b \mu_0}{2\rho} \left( \frac{R_{Arc}^2}{R_{Wire}^2} - 1 \right)}$$

where $R_{arc}$ and $R_{wire}$ are the radii of the are column and wire, respectively, and $\mu_0$ is the magnetic field constant. Constants $C_a$ and $C_b$ depend on the current density profiles on the anode wire and will be derived with the help of CFD simulations and simple experiments.

The equations above together with the minimization of the power loss provide all necessary information such as arc mean temperature, arc radius and arc current-voltage characteristics.

The benefits of the proposed arc model are:

- the arc model may be executed very fastly and thus it may be used as a part of a software for performing the invention and for example be used together with a model for the arc-wire interaction so that droplet formation and transport may be predicted.

**Arc-work piece interaction model**

Near the electrodes, high gradients of temperature and concentration of particles are present. These lead to deviations from thermal and chemical equilibrium. It is well known that the voltage drops in the near to wire region and in the near to work piece region are very high and dependent on electrode materials and arc column plasma properties. Therefore, it is important to take physical properties of the near electrodes phenomena for prediction of an arc welding process into consideration. In this section the model for the interaction between the arc and the work piece is presented. The model is based on the following:

- the region near the work piece is divided into two zones: the ionization zone and the space charge zone,

- collisions between particles are negligible in the space charge zone,

- electrons and heavy particles are considered as two fluids with two different temperatures,

- densities of ions and electrons are equal in the ionization zone,

- densities of ions and electrons are not equal in the space charge zone,

- the electron emission mechanism is thermo-field emission, and

- equations describing the two zones are integrated over the zones.

The inputs to the arc-work piece interaction region model are the work piece material and the plasma properties in the arc column region (e.g. temperature and pressure). The outputs of the model are the voltage drop over the arc-work piece interaction region and the heat flux from work piece to arc due to charged particles. Furthermore, there is a conductive heat flux due to neutral particles. These data are needed in the global energy balance of the arc column. The model is adapted in a way so that it may easily be coupled to the arc model described above.

The benefits of the proposed arc-work piece interaction model are:

- the model may be coupled to the arc column model and/or to the arc-wire interaction region model and allows a more complete description of the arc,

- the model gives accurate predictions of the heat flux into the work piece which is an important factor that effects the quality of the weld,

- the model predicts the rate of metal vapours from the work piece,

- the model may be executed very fastly and thus it is for instance not necessary to decrease the speed of a welding operation when using the model for controlling an arc welding operation, and

- the model considers explicitly the properties of the work piece material, for example the work function and the thermal conductivity.

For illustrating the influence of the work piece material on the arc welding process, a summary of the physics is presented in the following.

The energy flux from the plasma to the work piece is given by:

$$q = J_i \left[ k\left(2T_i + \frac{T_e}{2} - 2T_w\right) + e\left(\varphi_c + E_i - \phi_{ef}\right)\right] + J_e\left(2kT_e + e\phi_{ef}\right) - J_{em}\left(2kT_w + e\phi_{ef}\right) - q_{vap}$$

where $J_e$, $J_{em}$ and $J_i$ are the plasma back diffused electrons current density, the emitted electrons current density and the ion current density, respectively. $T_w$, $T_e$ and $T_i$ indicate the temperature of the cathode wall, electrons and ions. $\varphi_c$ and $E_i$ are the voltage drop in the space charge zone and the ionization energy of gas. $\phi_{eff}$ is the effective work function, which is defined as the difference between the mean energy of electrons inside the metal and the mean energy of the emitted electrons just outside the metal. $q_{vap}$ is the energy flux carried away by vaporization.

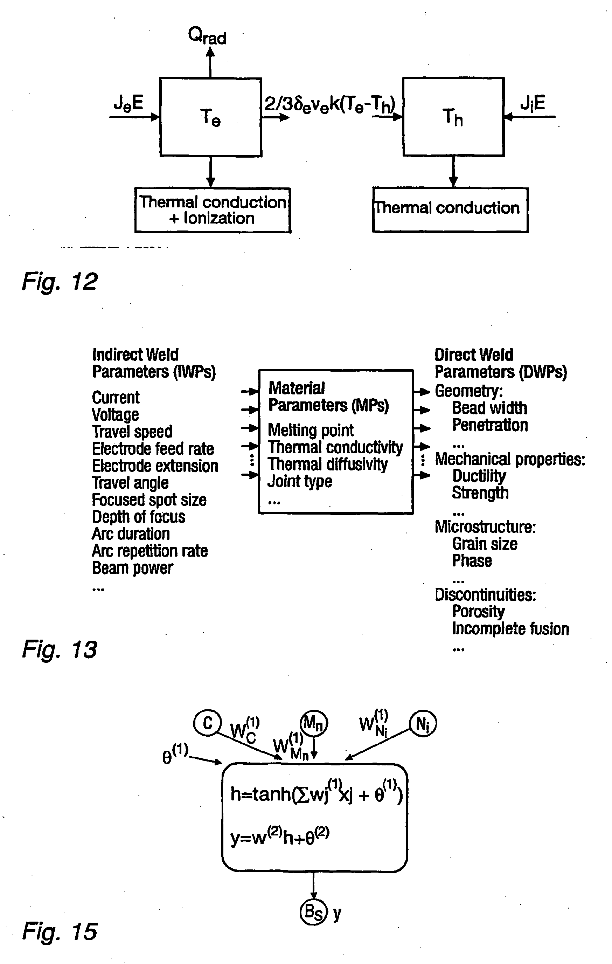

The energy balance in the ionization zone may be summarized as shown in Figure 12. This figure shows that a part of the total power density, the Joule effect, received by the electron gas is transferred to the heavy particles by elastic and inelastic collisions. The other part of energy is lost by radiation and by thermal flow to the cold walls.

According to earlier investigations is of the ionization zone, the main losses of electronic energy is due to ionization. Based on these results, the energy losses due to elastic collisions can be neglected. The energy balance is simplified by integration over the zone:

$$-J_{em}\left(2kT_w + e\varphi_c\right) + Joule\_effect = J_e\left(2kT_e + e\varphi_c\right) + e\,J_+E + 3.2JkT_e -$$

The first term on the left hand side is the flux of the electrons brought into the ionization zone by the emitted electrons accelerated in the space charge zone. The second term of the left hand side presents the work of the electric field over the electrons inside the ionization zone. The first tern on the right hand side is the energy flux carried away by the electrons leaving the ionization for the space charge zone. $eJ_iE$ is the losses of the electron energy due to ionization. Finally, the last term on the right hand side is the energy flux carried away by electrons leaving the ionization zone for the arc column.

To be able to predict the cathode region behaviour, the current densities $J_e$, $J_{em}$ and $J_l$ are required. These current densities are obtained by detailed kinetics of particles in the space charge zone. Here only the results are given.

The ion current density and the back-diffused electron current density are given by

$$J_i = n_{i0}e\sqrt{\frac{k(T_i + T_e)}{m_i}}$$

$$J_e = \frac{n_{e0}e}{4}\sqrt{\frac{8kT_e}{\pi m_e}}\exp\left(-\frac{e\varphi_c}{kT_e}\right)$$

According to the thermionic field emission mechanism, the emitted electron current density is given by Richardson-Dushman equation with the Schottky correction.

$$J_{em} = \frac{4\pi k^2 e m_e}{h^3} T_e^2 \exp\left(\frac{e\phi_{ef}}{kT_w}\right)$$

In the above equation, h and $m_e$ are the Planck's constant and the electron mass, respectively. The effective work function is connected to the electric field according to:

$$\phi_{ef} = \phi_0 - \sqrt{\left(\frac{e E_c}{4\pi\varepsilon}\right)}$$

where $\Phi_0$, $\varepsilon$ and $E_c$ are the work function of the work piece material, the dielectric constant and the electric field strength at the cathode wall.

The electron an ion densities at the edge of the space charge zone can be calculated with good approximation as:

$$\dot{n}_{i0} = \dot{n}_{e0} = n_{plasma} \frac{0.8}{2+\alpha}$$

where

$$\alpha = \left(\frac{kT_i}{m_i D_{i0} k_r n_{eq}^2}\right)^{\frac{1}{2}}$$

$D_{i0}$ and $k_r$ are the ion-neutral diffusion coefficient at the top of the equilibrium limit and the recombination rate.

The set of equation presented is closed and can be solved easily to predict cathode region properties or arc-work piece interaction region properties in the arc welding process.

**Arc-wire interaction region model**

In this section the model for the interaction between the arc and the wire (anode region) is presented. The model is based on the following:

- the region near the wire is divided into two zones: the ionization zone and the space charge zone,

- collisions between particles are negligible in the space charge zone,

- electrons and heavy particles are considered as two fluids with two different temperatures,

- densities of ions is much less than densities of electrons in space charge zone,

- temperature of electrons remains constant through anode region,

- the voltage drop in the ionization zone is negligible, and

- no electron emission from the wire is assumed.

The inputs to the arc-wire interaction region model are the wire material and the plasma properties in the arc column region (e.g. temperature and pressure). The outputs of the model are the voltage drop over the arc-wire interaction region and the heat flux from arc to wire due to charged particles. These data are needed in the global energy balance of the arc column. The model is adapted in a way so that it may easily be coupled to the arc model described above.

The benefits of the proposed arc-wire interaction model are:

- the model may be coupled to the arc column model and/or the arc-work piece interaction region model and allows a more complete description of the arc,

- the model gives accurate predictions of the heat flux into the wire which is an important factor for describing the welding process,

- the model may be executed very fastly and thus it is for instance not necessary to decrease the speed of a welding operation when using the model for controlling an arc welding operation, and

- the model considers explicitly the properties of the wire material, for example the work function.

For illustrating the influence of the wire on the arc welding process, a summary of the physics is presented in the following.

The total energy flux from the plasma to the wire is given by the losses from the arc due to charged particles, thermal conduction and radiation minus the heat power utilized for evaporation and radiation of the wire tip surface

$$\dot{Q} = \underbrace{\dot{Q}_{el} + \dot{Q}_{cond} + \dot{Q}_{rad}}_{\text{energy flux from arc}} - \underbrace{\dot{Q}_{ev,wire} - \dot{Q}_{rad,wire}}_{\text{energy flux from wire tip surface}}$$

For the energy flux of charged particles, electrons are considered only, since the ion current density flux in the arc-wire interaction region is low compared to the electron current density flux

$$\dot{Q}_{el} = j_e \left( \frac{5k_b}{2e} T_e + V_{an} + \phi \right)$$

There is energy flux due to thermal energy of electrons, kinetic energy of electrons resulting from acceleration in electric field and potential energy of electrons after phase transformation on the wire surface (free to bound). $j_e$ is the current density of the electrons and $T_e$ is the electron temperature in the arc-wire interaction region. The electron temperature is taken as the mean arc core temperature provided by the arc model. $\phi$ is the nominal work function of the wire surface (known), and $V_{an}$ is the voltage drop over the anode region, which consists mainly of the voltage drop in the space charge zone

$$V_{an} = \varphi_{an}$$

where $j_e$ is obtained from kinetics

$$j_e = j_e(n_e, \varphi_{an})$$

where $n_e$ is the electron density in the anode region and is calculated using the equation of state, thermodynamic equilibrium laws and the thermodynamic properties of the arc (temperature, pressure).

For obtaining the voltage drop over the arc-wire interaction region the ion current density $j_i$ is taken into account. The following relation can be derived from kinetics

$$j_i = j_i(n_i, \varphi_{an})$$

where $n_i$ is the ion density in the ionization zone, which is equivalent to the electron density $n_e$. Knowing the total current density j

$$j = j_e + j_i$$

the voltage drop over the arc-wire interaction region can be obtained.

Thermal conduction from the arc results from the temperature gradient in the anode region acting on ions, and the heat fluxes due to the kinetic energy of ions and electrons in the arc-wire interaction region

$$\dot{Q}_{cond} = \lambda \frac{\partial T}{\partial n} + n_i v_i h_i + n_e v_e h_e$$

where $v_i$ and $v_e$ are the velocities of ions and electrons, respectively, which are given by kinetics at thermodynamic equilibrium.

The radiation power from the arc is the fraction of the power totally radiated by the arc that reaches the wire tip surface

$$\dot{Q}_{rad} = \varepsilon_{eff} \sigma T_{arc}^4$$

where $\varepsilon_{eff}$ is an effective emission coefficient of the arc, which can be estimated from the emission coefficient of the arc column, assuming a cylinder, times the fraction of cylinder surface directed towards the wire.

The energy flux due to evaporation of the wire tip surface is given by the product of evaporation rate and latent heat of the wire material

$$\dot{Q}_{ev,wire} = \dot{m}\Delta h$$

where the evaporation rate an may be expressed as a function of arc column pressure and wire tip surface temperature

$$\dot{m} = \dot{m}(P, T_{ans})$$

The energy flux due to radiation from the wire tip surface is given by

$$\dot{Q}_{rad,wire} = \varepsilon \sigma T_{ans}^4$$

The only unknown remaining is the wire tip surface temperature $T_{ans}$. This temperature can be obtained from the wire model. A simple estimation is that it is equal to the melting temperature of the wire material.

The set of equations presented above is closed and can be solved to predict the anode region properties or arc-wire interaction region properties in the arc welding process.

**Wire model**

In the are welding process, heat transfer from the arc to the wire causes rapid formation of droplets at the wire tip. Impact of detached and transferred droplets through the are to the work piece may result in volume deformations and alteration of the mechanical properties of the weld. In the following, a model is suggested for prediction of the mass, heat and momentum transfer from dripping droplets into the work piece.

The shape of melt metal at wire tip is influenced by time-dependent forces such as gravity, inertia, surface tension, electromagnetic force, the effect of arc pressure, viscous drag by the gas flow. An extensive description of thermophysical phenomena involved in mechanisms of formation of droplets may be formulated accurately with 2-D computer tools based on a detailed analysis of the plasma-electrode interactions in conditions of local thermodynamic equilibrium of the plasma and laminar flow in the calculation domain. However, calculations required for these operations may be time-consuming and not acceptable in a user interface software to be used for controlling and/or monitoring the quality of a weld in an welding operation.

A simplified approach to the problem can be to consider the one-dimensional energy balance of a wire dominated by the effects of evaporation, metal transfer from the wire, ohmic heating in the wire by the arc current and current transfer from the plasma. In a quasisteady state mode, the total energy balance of the wire can be written as:

$$E_v + E_m = E_{ch} + E_e$$

when the heat transfer processes for integrated values over the total volume of the wire stick-out are defined as:

$$E_v = \int_S q_{ev} L dS$$

due to the evaporation from the surface to the tip of the wire;

$$E_m = \rho v_0 Sc \int_{T=300}^{T_{mean}} C_p dT$$

the heat losses due to metal transfer in the form of droplets detaching from the wire tips;

$$E_{ch} = \int_{V_w} \frac{j^2}{\sigma} d\upsilon$$

the heating in the wire by the arc current, and

$$E_e = \int_S \left[ j_i \left( V_i - V_s + \frac{5k_b}{2e} T \right) + j_e \left( \phi + \frac{5k_b}{2e} \right) T_p \right] dS$$

the heat transferred from the plasma to the droplet at the tip of the wire. In the above relations, $V_w$ is the total volume of the wire stick-out, S is the total external surface of wire, and $Sc = \pi r^2$ is the cross-sectional area of the wire at the end of the wire at z=0 (T=300- K) and r is its radius. The quantities $C_p$, $\kappa$ and $\rho$ are the specific heat, the thermal conductivity and density of the wire material at the local wire temperature, respectively. $T_{mean}$ is the average droplet temperature at the time of detachment, and $v_0$ is the wire feed speed. The evaporation rate in $g.s^{-1}$ at the wire tip is denoted as $q_{ev} = P_{ev} m_a/4(m_a k_b T_a/3)^{0.5}$ where $P_{ev}$ and $m_a$ are the vapour pressure and the atomic mass of the wire, respectively, while

$k_b$ is the Boltzmann constant and $T_a$ the temperature of the wire surface. Other symbols are the following: L, the latent heat of evaporation of the wire material, e, the elementary charge, $j_i$ the ion current density from the plasma, $j_e$ the electron current density from the plasma; the total current density is denoted j; $T_p$ is the temperature immediately in front of the wire, $\phi$ is the nominal work function of the wire surface; $\sigma$ represents the electrical conductivity, $V_i$ is the first ionization potential of the plasma gas and $V_s$ the voltage drop across the sheath in the wire region.

In this approximation, conventional heat conduction from the plasma through neutral particles, conduction through the end of the wire and black body radiation are neglected since their effect can theoretically be shown to be small compared to $E_v$, $E_m$, $E_{oh}$ and $E_e$.

Heat transferred from the plasma to the wire may be expressed

$$S_a = j_i\left(V_i - V_s + \frac{5k_b}{2e}T_a\right) + j_e\left(\phi + \frac{5k_b}{2e}T_p\right) - q_{ev}L$$

By solving the time-dependent energy conservation equation at small time steps,

$$\rho\,\dot{}\,\frac{\partial h}{\partial t} + \rho v_0\frac{\partial h}{\partial z} = \frac{\partial}{\partial z}\left(\kappa\frac{\partial T}{\partial z}\right) + \frac{5k_b}{2e}\left(\frac{j_z}{C_p}\frac{\partial h}{\partial z}\right) + \frac{j^2}{\sigma} + F$$

where F is a term referring to the heat input $S_a$; from the plasma, the temperature profile of the wire can be obtained, and therefore the molten length at the wire tip can be estimated as a function of time.

Metal transfer in the form of a droplet will occur when the molten wire reaches a critical length $L_{crit}$ for a given set of welding parameters. Estimation of the volume of droplet can be deduced from a dynamic treatment in the wire region using simplified expressions of surface tensions, electromagnetic forces, gravity, arc pressure and viscous drag force around the molten metal at the tip of the wire at each time step.

The initial shape of the electrode at a time t=0 can be taken as cylindrical with diameter equal to that of the wire covered by about a 0.1 cm thick layer of molten liquid at the tip of the wire. Initial conditions are to correspond to an arc operating with continuously moving wire of undeformed cylindrical shape.

The inputs required for the wire model are the arc current, the wire feed speed, the wire diameter, the initial inter-electrode separation distance, the torch angle and the characteristics of the arc. The latter may be supplied into the model by outputs from the arc model.

The outputs include the detachment frequency, the volume of a detached droplet of molten metal, the average temperature in a droplet and the acceleration supported by the droplet in the axis of the arc column at detachment. This result will provide information for evaluation of reinforcement of joint for a given gas arc welding process and work piece geometry. Also available from the model will be the wire stick-out length and resistance, which allow a more accurate calculation of the arc length than from the simplified model described below.

As a first step a simplified model for the wire has been used. The arc length is obtained from a balance between wire feed rate $w_{fr}$ and wire melting rate

$$\frac{d}{dt}\left(L + \tau\frac{dL}{dt}\right) = -w_{fr} + \frac{I^2R_{an} + I\delta V}{\delta H}$$

where $\tau$ is a time constant that delays the change of arc length from change of heat input. The resistance of the wire stickout $R_{an}$ is calculated assuming a constant stickout temperature

$$R_{an} = \frac{\varsigma}{A_w}(D - L)$$

where $\varsigma$ is the electrical resistivity of the wire, Razz the wire cross-section area, D the distance between the nozzle and the work piece. L is the arc length, which is the output of this model.

The power input considers both Ohmic heating of the wire stickout and energy transfer from arc to wire. The wire melting rate is obtained by relating the power input to the wire enthalpy per unit length $\delta H$. The latter accounts for energy release due to electron absorption in anode and thermal energy carried by electrons

$$\delta V = \phi_{an} + \frac{5k_B T_e}{2e}$$

where $\phi_{an}$ is the work function of the anode material, $k_B$ is the Boltzmann's constant, $T_e$ is the electron temperature and e is the electron charge.

**Work piece model**

As part of multivariable processes, automated arc welding may be defined by so called indirect welding parameters (IWPs), acting upon a set of material parameters (MPs) with a resulting set of direct welding parameters (DWPs). IWPs should be chosen appropriately for given MPs. DWPs are to be explicitly fixed by specifications of e.g. optimal weld bead width, penetration and appearance.

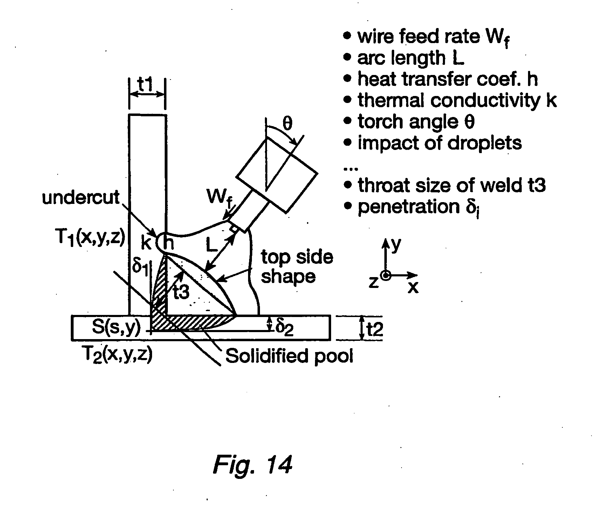

A basic issue to be considered regarding control for arc welding is to determine what is to be controlled and which parameters are accessible to control actions in the process. See Figs 13 and 14.

Quality control functionalities to be implemented in the proposed software could consist of:

- process stability monitoring, i.e. high speed tracking by e.g. timedomain statistical analysis based upon measured and predicted average IWPs, for example arc voltage or current intensity. It may allow detection of disturbing inputs (anomalies in gun-to-work piece distance, insufficient shielding gas coverage, etc.). Advantageously, vision sensors and sound probes also may be used,
- quality assurance of geometry and mechanical properties of weld joints (DWPs) by process parameters setting from fast advanced physical models based on MPs and IWPs. The models may include detailed arc-work piece interactions from weld pool phenomena (arc efficiency, droplet dripping, gas and impurities diffusion, etc.) and micro structural criteria (micro phases, residual stress, dislocations, etc.).

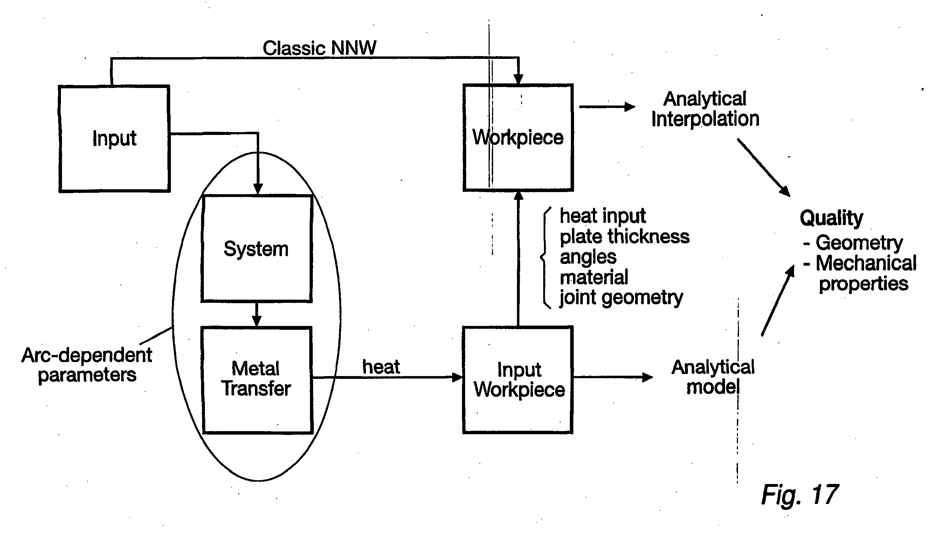

One work piece model is illustrated in Fig 17. In practice, modelling of weld properties is often based on neural networks trained for a particular geometry of joints. Neural networks are parameterised non-linear regression models, see Fig 14. They can provide adapted solutions for treatment of intricate multi-variable systems when physical models are difficult to establish or do not exist. Also a program using neural networks should include mass, heat, and momentum transfers from the arc and dripping of droplets into work piece. Indeed, these quantities may have considerable consequences on the overall geometry of the weld and its intrinsic quality. An important component in the elaboration of a neural network is the control of the characteristic magnitudes of the weights (noted $w_j^{(i)}$ in Fig 15) of input parameters. This operation requires that the network is preliminary trained from a set of known outputs when the weights are systematically changed until a best-fit description of the network is obtained as a function of the inputs. Among other possibilities for modelling of the work piece, a neural network program may be trained on gravity joints obtained under specified conditions (mild steel, gas shielding, wire speed, wire feed rate, plate thickness, etc) by an arc welding robot.

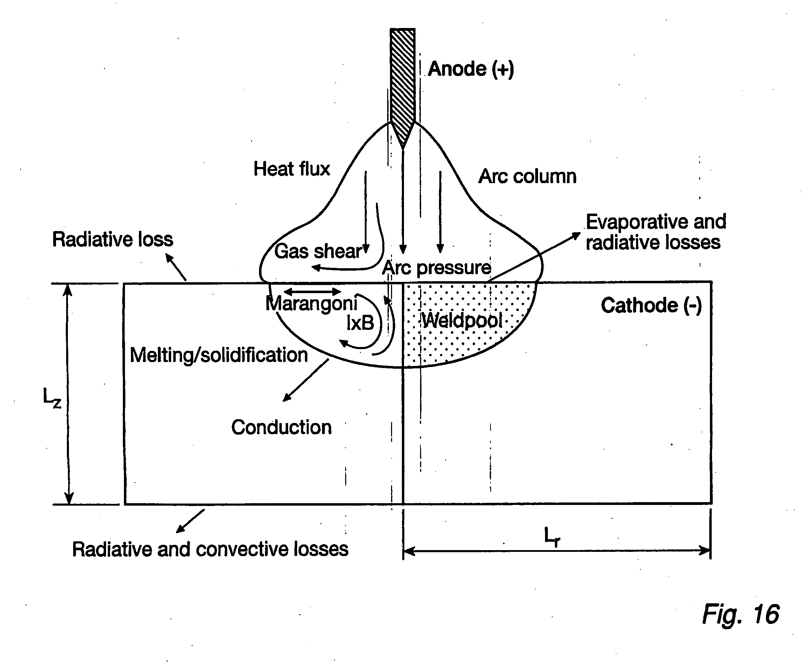

Solidification of melt during GMA welding process depends on heat transfer conditions in the weld pool, see Fig 16. Fusion mechanism and characteristics of resultant welds are complex to model analytically. Neural networks can represent a suitable alternative for a model of a workpiece.

Shape and mechanical properties of welds can strongly be affected by electromagnetic forces, buoyancy forces and surface tension forces that induce flow of molten metal in the weld pool possibly affected by impacts of droplets, vaporization, arc pressure and molecular contamination. Accurate enough predictions of weld quality by analytical model of those phenomena can be difficult to provide as they call for detailed computation and optimized calculation routines including appropriate numerical methods for moving boundary systems.

Neural networks are powerful parameterised non-linear regression models for which no fundamental knowledge of the system to be modelled is required. They can be generally described as series of weighted variables (input parameters $x_i$)

$$y_j = \sum_j w_i^{(1)} x_i + \theta^{(1)}$$

to from arguments of non-linear regression transfer functions (hidden variables).

Example:

$$h_j = \tanh y_j$$

Since a one hidden-unit model ($h_j = h$, $y = w^{(2)}H + \theta^{(2)}$ output parameter) may not be sufficiently flexible, further degrees of nonlinearity can be introduced by combining several non-linear regression transfer functions (output parameter $y$)

$$y = \sum_j w_j^{(2)} h_j + \theta^{(2)}$$

hence permitting neural networks to capture almost arbitrarily non-linear relationships. The capability of neural networks to handle complexity is much related to the number of regression transfer functions, i.e. the number of hidden layers. An important component in the elaboration of a neural network is the control of the characteristic magnitudes of the weights ($w_i^{(j)}$) of input quantities. This operation requires that the network is preliminary trained from a set of known outputs when the weights are systematically changed until a best-fit description of the network is obtained as a function of the inputs. Numerical procedures can be developed to avoid overfitting difficulties. In some cases, error estimates can also be calculated to define fitting uncertainty by considering probability distributions of sets of weights instead of using a unique one.

A neural network may be produced to model effects of heat and mass transfers on weld geometry as part of an Arc Welding End-user Software. However, as already mentioned, many experimental parameters can influence an arc welding process (for example wire properties, shielding gas properties, power supply, wire feed speed, welding speed, electrode extension, etc. - see figure). A systematic investigation of merely 10 parameters at only three levels of variation would result in $3^{10}$, i.e. about $59.10^3$ possible combinations to explore. Theoretical knowledge of the are suggests that the arc current, the welding speed and material properties are mainly responsible for heat and mass transfer into the workpiece. A GMAW process can be decomposed into separate interdependent modules for, respectively, the electrical circuit, the wire (anode), the arc, for the interactions between the arc and the wire (i.e. droplet formation), the interactions between the arc and the workpiece, and the workpiece itself (cathode). The amount of welds to be produced for making a neural network model of the workpiece can hence be reduced to a reasonably small number by successively comparing model results for the diverse modules to a few relevant experimental test cases characteristic of the functionality of the module tested, all critical parameters of other modules being fixed in other respects. In this aim, intern resistances, inductances and resistances on the welding equipment to be used for experiments should be measured beforehand and recording of process signals during welding (e.g. arc current and voltage, encoding signal form wire feeding system, etc.) should be carried out with an acquisition unit. Validation of module for electrical circuit can be achieved by comparing measured arc current and voltage with predicted values of these quantities at different wire feed speeds and supply voltages for different welding modes (short arc, spray, rapid-arc), all other parameters being kept constant and identical between models and experiments in other respects. Validation of the wire model for simulation of mass transfer mode (i.e. droplet dripping) can be achieved in a similar way by further measuring the average mass transfer rate from for several dimensions of wire diameter. Validation of the arc model can be achieved by varying supply voltage and electrode extension for different shielding gases and wire diameters, all other parameters being kept constant. Adjustments of each model may have to be implemented stepwise during validation of each module. Eventually, experiments to be carried out for modelling of complete effects of mass and heat transfer into workpiece simply concern the influence of torch and push/drag angles, welding speed, plate thickness, plate material and joint configuration, all other aspects being supposedly encompassed in the previously validated other routines. For maximum applicability of the software, experiments shall be carried out on different joints (for example overlap, T-joint) made e.g. in horizontal-vertical configuration of gravity configuration or other, depending on targeted market for the software.

As input from the arc-dependent models to a neural network model of the workpiece, temperature distributions of electrons and ions, current intensity due to both species and evaporation rate at the workpiece surface will be accessible from a pre-calculated matrix established with the validated models. Mass, heat and speed of transferring droplets will also be referenced as inputs of the neural network from predictions obtained with the validated model for wire.

The output of the neural network should enable a determination of the weld quality as defined either by geometry or mechanical properties. A complete version of the software is to include all possible aspects of quality. When quality is associated to weld shape, the outputs will consist of geometrical dimensions of welds. A sketch of predicted weld geometry will be displayed or dimensions according to the standard EN-25817 will be listed on end-user interface. When quality is associated to mechanical properties, the outputs will consist of predicted values of e.g. yield strength, ultimate tensile strength, Charpy toughness and temper embrittlement.

## Claims

1. A method of controlling the arc welding equipment used in a welding operation and adjustable by varying at least one welding parameter value, comprising:

   - determining (30) said at least one welding parameter value while using (31) a theoretical model of the welding process associated with the welding operation,
   - dividing (33) the welding process into at least two separate parts, of which at least one part represents the arc or a portion thereof, in the theoretical model,
   - representing (34) each of said at least two welding process parts and the welding parameter/parameters associated therewith by a model component,
   - putting (35) the model components and a model power source in an electric circuit model, and
   - calculating (36) at least one electric circuit model parameter value related to said at least one welding parameter from the electric circuit model.

2. A method according to claim 1, comprising controlling (32) the operation of the welding equipment and the welding process associated therewith by using said at least one welding parameter value for adjusting the welding equipment.

3. A method according to claim 1 or 2 comprising:

   - inputting (40) data into a theoretical model representing the welding process,
   - determining (41) at least one welding parameter value of the welding process while using (42) the theoretical model and the data input, with the purpose to simulate (43) the welding process.

4. A method according to any of claims 1-3, comprising:

   - inputting (50) data into a theoretical model representing the welding process associated with the welding operation,
   - determining (51) at least one property of the weld related to at least one welding parameter of the welding process while using the theoretical model and the data input, with the purpose to predict the quality of a weld obtained from the arc welding operation.

5. A method according to any of claims 1-4 comprising:

   - dividing the welding process so that the arc-wire interaction region part (18) of the welding process is separately represented by one of said model components (13) in the electric circuit model (12).

6. A method according to any of claims 1-5 comprising:

   - dividing the welding process so that the arc-work piece interaction region part (10) of the welding process is separately represented by one of said model components (13) in the electric circuit model (12).

7. A method according to any of claims 1-4 comprising:

- dividing the welding process so that the arc-wire interaction region part (8) of the welding process is separately represented by one of said model components (13) in the electric circuit model (12), and/or
- dividing the welding process so that the arc-work piece interaction region part (10) of the welding process is separately represented by one of said model components (13) in the electric circuit model (12).

8. A method according to any of claims 1-7 comprising:

   - dividing the welding process so that the arc region part (6) of the welding process is separately represented by one of said model components (13) in the electric circuit model (12).

9. A method according to claim 8 comprising:

   - determining said model component representing the arc region part (6) by means of information obtained through calculations from a physical model of the arc column region part (9) of the welding process.

10. A method according to any of claims 8-9 comprising:

    - determining said model component representing the arc region part (6) by means of information obtained through calculations from a physical model of the arc-wire interaction region part (8) of the welding process.

11. A method according to claim 5 or 10 comprising:

    - dividing the arc-wire interaction region part (8) of the welding process into a first zone (64) nearest to the wire and a second zone (65) nearest to the arc column for describing the properties of the zones through different physical submodels.

12. A method according to any of claims 8-10 comprising:

    - determining said model component representing the arc region part (6) by means of information obtained through calculations from a physical model of the arc-work piece interaction region part (10) of the welding process.

13. A method according to claim 6 or 12 comprising:

    - dividing the arc-work piece interaction region part (10) of the welding process into a first zone (66) nearest to the work piece and a second zone (67) nearest to the arc column for describing the properties of the zones through different physical submodels.

14. A method according to any of claims 8, 9, 10 or 12 comprising:

    - determining said model component representing the arc region part (6) by means of said physical model describing the arc by at least one equation independent of the extension in space of the arc.

15. A method according to any of claims 14 comprising:

    - determining said model component representing the arc region part (6) by means of said physical model describing the arc by said at least one equation only dependent on the time.

16. A method according to any of claims 1-15 comprising:

    - dividing the welding process so that the arc column region part (9) of the welding process is separately represented by one of said model components (13) in the electric circuit model (12).

17. A method according to any of claims 1-16 comprising:

    - dividing the welding process so that the wire part (5) of the welding process is separately represented by one of said model components (13) in the electric circuit model (12).

**18.** A method according to any of claims 1-17, ***characterized* in that** it comprises the step of:

- dividing the welding process so that the work piece part (7) of the welding process is separately represented by one of said model components (13) in the electric circuit model (12).

**19.** A device comprising an arc welding equipment (21) used in a welding operation and adjustable by varying at least one welding parameter and an arrangement (22) for controlling the operation of the arc welding equipment, said control arrangement including a means (23) adapted to determine the value of said at least one welding parameter while using a theoretical model (24) of the welding process, and a member (25) adapted to control the operation of the welding equipment and the welding process associated therewith by using said at least one welding parameter value for adjusting the welding equipment, ***characterized* in that** the means (23) is adapted to use said theoretical model (24) comprising at least two separate parts (26, 27), of which at least one part represents the arc or a portion thereof, corresponding to different parts of the welding process, each model part being represented by a model component (13), said model components together with a model power source (14) being included in an electric circuit model (12) and that said means (23) is adapted to calculate at least one electric circuit model parameter value related to said at least one welding parameter from the electric circuit model for said control by said member (25).

**20.** A device according to claim 19, wherein means (23) is adapted to use said theoretical model (24) having the arc-wire interaction region part (8) of the welding process separately represented by one of said model components (13) in the electric circuit model (12).

**21.** A device according to any claims 18-20, wherein the means (23) is adapted to use said theoretical model (24) having the arc-work piece interaction region part (10) of the welding process separately represented by one of said model components (13) in the electric circuit model (12).

**22.** A device according to claim 19, wherein the means (23) is adapted to use said theoretical model (24) having the arc-wire interaction region part (18) of the welding process separately represented by one of said model components (13) in the electric circuit model (12) and/or the arc-work piece interaction region part (10) of the welding process separately represented by one of said model components (13) in the electric circuit model (12).

**23.** A device according to any of claims 19-22, wherein the means (23) is adapted to use said theoretical model (24) having the arc region part (6) of the welding process separately represented by one of said model components (13) in the electric circuit model (12).

**24.** A device according to claim 23, wherein the means (23) is adapted to use said theoretical model (24) having information obtained through calculations from a physical model of the arc column region part (9) of the welding process to be used in determining said model component (13) representing the arc region part (6).

**25.** A device according to any claims 23-24, wherein the means (23) is adapted to use said theoretical model (24) having information obtained through calculations from a physical model of the arc-wire interaction region part (8) of the welding process to be used in determining said model component (13) representing the arc region part (6).

**26.** A device according to claim 20 or 25, wherein the means (23) is adapted to use said theoretical model (24) having the arc-wire interaction region part (8) of the welding process divided into a first zone (64) nearest to the wire and a second zone (65) nearest to the arc column for describing the properties of the zones through different physical submodels.

**27.** A device according to any claims 23-25, wherein the means (23) is adapted to use said theoretical model (24) having information obtained through calculations from a physical model of the arc-work piece interaction region part (10) of the welding process to be used in determining said model component (13) representing the arc region part (6).

**28.** A device according to claim 21 or 27, wherein the means (23) is adapted to use said theoretical model (24) having the arc-work piece interaction region part (10) of the welding process divided into a first zone (66) nearest to the work piece and a second zone (67) nearest to the arc column for describing the properties of the zones through different physical submodels.

**29.** A device according to any of claims 23, 24, 25 or 27, wherein the means (23) is adapted to use said model component determined by means of said physical model describing the arc by at least one equation independent of the extension in space of the arc.

30. A device according to claim 29, wherein the means (23) is adapted to use said model component determined by means of said physical model describing the arc by said at least one equation only dependent on the time.

31. A device according to any of claims 19-30, wherein the means (23) is adapted to use said theoretical model (24) having the arc column region (9) part of the welding process separately represented by one of said model components (13) in the electric circuit model (12).

32. A device according to any of claims 19-31, wherein the means (23) is adapted to use said theoretical model (24) having the wire part (5) of the welding process separately represented by one of said model components (13) in the electric circuit model (12).

33. A device according to any of claims 19-32, wherein the means (23) is adapted to use said theoretical model (24) having the work piece part (7) of the welding process separately represented by one of said model components (13) in the electric circuit model (12).

34. Use of a method according to any of claims 1-18 to predict the metal droplet formation in an arc welding operation for a given set of welding parameters,

35. Use of a method according to any of claims 1-18 to predict the metal transfer mode in an arc welding operation for a given set of welding parameters,

36. Use of a method according to any of claims 1-18 to calculate at least one welding parameter value required for obtaining a particular metal transfer mode in a welding operation.

37. Use of a method according to any of claims 1-18 to calculate at least one default setting value to be used for adjusting an automatic arc welding equipment prior to welding.

38. A computer program product comprising code means and/or software code portions enabling a processor to perform the steps of any of claims 1-18.

39. A computer program product according to claim 38 operating a device according to any of claims 19-33.

40. A computer program product according to claim 38 or 39 provided at least partially through a network such as Internet.

41. A computer readable medium containing a computer program product according to any of claims 37-39.

**Patentansprüche**

1. Verfahren zur Steuerung der Bogenschweißausrüstung, die bei einem Schweißvorgang verwendet wird und die durch Variieren von mindestens einem Schweißparameterwert einstellbar ist, umfassend:

    - Bestimmen (30) des mindestens einen Schweißparameterwerts während der Verwendung (31) eines theoretischen Modells des Schweißprozesses, verknüpft mit dem Schweißvorgang;
    - Aufteilen (33) des Schweißprozesses in mindestens zwei getrennte Teile, von denen mindestens ein Teil den Bogen oder einen Abschnitt davon darstellt, in dem theoretischen Modell;
    - Darstellen (34) von jedem der mindestens zwei Schweißprozessteile und der/des damit verknüpften Schweißparameter/Schweißparameters durch eine Modellkomponente;
    - Einsetzen (35) der Modellkomponenten und einer Modellstromquelle in ein Modell einer elektrischen Schaltung;
    - Berechnen (36) von mindestens einem Parameterwert des Modells der elektrischen Schaltung, der sich auf den mindestens einen Schweißparameter des Modells der elektrischen Schaltung bezieht.

2. Verfahren nach Anspruch 1, umfassend Steuern (32) des Betriebs der Schweißausrüstung und des damit verknüpften Schweißprozesses durch Verwendung des mindestens einen Schweißparameterwerts für die Einstellung der Schweißausrüstung.

3.  Verfahren nach Anspruch 1 oder 2, umfassend:

    - Eingeben (40) von Daten in ein theoretisches Modell, das den Schweißprozess darstellt;
    - Bestimmen (41) von mindestens einem Schweißparameterwert des Schweißprozesses während der Verwendung (42) des theoretischen Modells und der Dateneingabe, zum Zweck der Simulierung (43) des Schweißprozesses.

4.  Verfahren nach irgendeinem der Ansprüche 1 bis 3, umfassend:

    - Eingeben (50) von Daten in ein theoretisches Modell, das den Schweißprozess darstellt, der mit dem Schweißvorgang verknüpft ist;
    - Bestimmen (51) von mindestens einer Eigenschaft der Schweißung, die sich auf mindestens einen Schweißparameter des Schweißprozesses bezieht, während der Verwendung des theoretischen Modells und der Dateneingabe, zum Zweck der Vorhersage der Qualität einer Schweißung, die aus dem Bogenschweißvorgang erhalten wird.

5.  Verfahren nach irgendeinem der Ansprüche 1 bis 4, umfassend:

    - Aufteilen des Schweißprozesses, so dass der Bereichsteil (18) der Bogen-Draht-Interaktion des Schweißprozesses getrennt durch eine der Modellkomponenten (13) in dem Modell der elektrischen Schaltung (12) dargestellt wird.

6.  Verfahren nach irgendeinem der Ansprüche 1 bis 5, umfassend:

    - Aufteilen des Schweißprozesses, so dass der Bereichsteil (10) der Bogen-Werkstück-Interaktion des Schweißprozesses getrennt durch eine der Modellkomponenten (13) in dem Modell der elektrischen Schaltung (12) dargestellt wird.

7.  Verfahren nach irgendeinem der Ansprüche 1 bis 4, umfassend:

    - Aufteilen des Schweißprozesses, so dass der Bereichsteil (8) der Bogen-Draht-Interaktion des Schweißprozesses getrennt durch eine der Modellkomponenten (13) in dem Modell der elektrischen Schaltung (12) dargestellt wird; und/oder
    - Aufteilen des Schweißprozesses, so dass der Bereichsteil (10) der Bogen-Werkstück-Interaktion des Schweißprozesses getrennt durch eine der Modellkomponenten (13) in dem Modell der elektrischen Schaltung (12) dargestellt wird.

8.  Verfahren nach irgendeinem der Ansprüche 1 bis 7, umfassend:

    - Aufteilen des Schweißprozesses, so dass der Bereichsteil (6) des Bogens des Schweißprozesses getrennt durch eine der Modellkomponenten (13) in dem Modell der elektrischen Schaltung (12) dargestellt wird.

9.  Verfahren nach Anspruch 8, umfassend:

    - Bestimmen der Modellkomponente, die den Bereichsteil (6) des Bogens darstellt, mittels Informationen, die durch Berechnungen von einem physikalischen Modell des Bereichsteils (9) der Bogensäule des Schweißprozesses erhalten werden.

10. Verfahren nach irgendeinem der Ansprüche 8 bis 9, umfassend:

    - Bestimmen der Modellkomponente, die den Bereichsteil (6) des Bogens darstellt, mittels Informationen, die durch Berechnungen von einem physikalischen Modell des Bereichsteils (8) der Bogen-Draht-Interaktion des Schweißprozesses erhalten werden.

11. Verfahren nach Anspruch 5 oder 10, umfassend:

    - Aufteilen des Bereichsteils (8) der Bogen-Draht-Interaktion des Schweißprozesses in eine erste Zone (64) nahe dem Draht und eine zweite Zone (65) nahe der Bogensäule, um die Eigenschaften der Zonen durch verschiedene physikalische Untermodelle zu beschreiben.

12. Verfahren nach irgendeinem der Ansprüche 8 bis 10, umfassend:

- Bestimmen der Modellkomponente, die den Bereichsteil (6) des Bogens darstellt, mittels Informationen, die durch Berechnungen von einem physikalischen Modell des Bereichsteils (10) der Bogen-Werkstück-Interaktion des Schweißprozesses erhalten werden.

13. Verfahren nach Anspruch 6 oder 12, umfassend:

- Aufteilen des Bereichsteils (10) der Bogen-Werkstück-Interaktion des Schweißprozesses in eine erste Zone (66) nahe dem Werkstück und eine zweite Zone (67) nahe der Bogensäule, um die Eigenschaften der Zonen durch verschiedene physikalische Untermodelle zu beschreiben.

14. Verfahren nach irgendeinem der Ansprüche 8, 9, 10 oder 12, umfassend:

- Bestimmen der Modellkomponente, die den Bereichsteil (6) des Bogens darstellt, mittels des physikalischen Modells, das den Bogen beschreibt, durch mindestens eine Gleichung, unabhängig von der Erstreckung des Bogens im Raum.

15. Verfahren nach Anspruch 14, umfassend:

- Bestimmen der Modellkomponente, die den Bereichsteil (6) des Bogens darstellt, mittels des physikalischen Modells, das den Bogen beschreibt, durch die mindestens eine Gleichung, nur abhängig von der Zeit.

16. Verfahren nach irgendeinem der Ansprüche 1 bis 15, umfassend:

- Aufteilen des Schweißprozesses, so dass der Bereichsteil (9) der Bogensäule des Schweißprozesses getrennt durch eine der Modellkomponenten (13) in dem Modell (12) der elektrischen Schaltung dargestellt wird.

17. Verfahren nach irgendeinem der Ansprüche 1 bis 16, umfassend:

- Aufteilen des Schweißprozesses, so dass der Drahtteil (5) des Schweißprozesses getrennt durch eine der Modellkomponenten (13) in dem Modell (12) der elektrischen Schaltung dargestellt wird.

18. Verfahren nach irgendeinem der Ansprüche 1 bis 17, **dadurch gekennzeichnet, dass** es den Schritt umfasst:

- Aufteilen des Schweißprozesses, so dass der Werkstückteil (7) des Schweißprozesses getrennt durch eine der Modellkomponenten (13) in dem Modell (12) der elektrischen Schaltung dargestellt wird.

19. Vorrichtung, umfassend eine Bogenschweißausrüstung (21), die bei einem Schweißvorgang verwendet wird und die durch Variieren von mindestens einem Schweißparameterwert einstellbar ist, und eine Einrichtung (22) zum Steuern des Betriebs der Bogenschweißausrüstung, wobei die Steuereinrichtung ein Mittel (23) einschließt, das eingerichtet ist, um den Wert des mindestens einen Schweißparameters zu bestimmen während ein theoretisches Modell (24) des Schweißprozesses verwendet wird, und ein Element (25), das eingerichtet ist, den Betrieb der Schweißausrüstung und den damit verknüpften Schweißprozess durch Verwendung des mindestens einen Schweißparameterwerts, um die Schweißausrüstung einzustellen, zu steuern,
**dadurch gekennzeichnet, dass**
das Mittel (23) eingerichtet ist, das theoretische Modell (24) umfassend mindestens zwei getrennte Teile (26, 27) zu verwenden, von denen mindestens ein Teil den Bogen oder einen Abschnitt davon darstellt, verschiedenen Teilen des Schweißprozesses entsprechend, wobei jeder Modellteil durch eine Modellkomponente (13) dargestellt wird, wobei die Modellkomponenten zusammen mit einer Modellstromquelle (14) in einem Modell (12) einer elektrischen Schaltung enthalten sind, und dass das Mittel (23) eingerichtet ist, mindestens einen Parameterwert des Modells der elektrischen Schaltung zu berechnen, der sich auf den mindestens einen Schweißparameter von dem Modell der elektrischen Schaltung bezieht, für die Steuerung durch das Element (25).

20. Vorrichtung nach Anspruch 19, wobei das Mittel (23) eingerichtet ist, das theoretische Modell (24) zu verwenden, wobei der Bereichsteil (8) der Bogen-Draht-Interaktion des Schweißprozesses getrennt durch eine der Modellkomponenten (13) in dem Modell (12) der elektrischen Schaltung dargestellt ist.

21. Vorrichtung nach einem der Ansprüche 18 bis 20, wobei das Mittel (23) eingerichtet ist, das theoretische Modell (24) zu verwenden, wobei der Bereichsteil (10) der Bogen-Werkstück-Interaktion des Schweißprozesses getrennt durch eine der Modellkomponenten (13) in dem Modell (12) der elektrischen Schaltung dargestellt ist.

22. Vorrichtung nach Anspruch 19, wobei das Mittel (23) eingerichtet ist, das theoretische Modell (24) zu verwenden, wobei der Bereichsteil (18) der Bogen-Draht-Interaktion des Schweißprozesses getrennt durch eine der Modellkomponenten (13) in dem Modell (12) der elektrischen Schaltung dargestellt ist, und/oder der Bereichsteil (10) der Bogen-Werkstück-Interaktion des Schweißprozesses getrennt durch eine der Modellkomponenten (13) in dem Modell (12) der elektrischen Schaltung dargestellt ist.

23. Vorrichtung nach einem der Ansprüche 19 bis 22, wobei das Mittel (23) eingerichtet ist, das theoretische Modell (24) zu verwenden, wobei der Bereichsteil (6) des Bogens des Schweißprozesses getrennt durch eine der Modellkomponenten (13) in dem Modell (12) der elektrischen Schaltung dargestellt ist.

24. Vorrichtung nach Anspruch 23, wobei das Mittel (23) eingerichtet ist, das theoretische Modell (24) zu verwenden, wobei Informationen durch Berechnungen von einem physikalischen Modell des Bereichsteils (9) der Bogensäule des Schweißprozesses erhalten wurden, zur Verwendung bei der Bestimmung der Modellkomponente (13), die den Bereichsteil (6) des Bogens darstellt.

25. Vorrichtung nach einem der Ansprüche 23 bis 24, wobei das Mittel (23) eingerichtet ist, das theoretische Modell (24) zu verwenden, wobei Informationen durch Berechnungen von einem physikalischen Modell des Bereichsteils (8) der Bogen-Draht-Interaktion des Schweißprozesses erhalten wurden, zur Verwendung bei der Bestimmung der Modellkomponente (13), die den Bereichsteil (6) des Bogens darstellt.

26. Vorrichtung nach Anspruch 20 oder 25, wobei das Mittel (23) eingerichtet ist, das theoretische Modell (24) zu verwenden, wobei der Bereichsteil (8) der Bogen-Draht-Interaktion des Schweißprozesses in eine erste Zone (64) nahe dem Draht und eine zweite Zone (65) nahe der Bogensäule aufgeteilt ist, um die Eigenschaften der Zonen durch verschiedene physikalische Untermodelle zu beschreiben.

27. Vorrichtung nach einem der Ansprüche 23 bis 25, wobei das Mittel (23) eingerichtet ist, das theoretische Modell (24) zu verwenden, wobei Informationen durch Berechnungen von einem physikalischen Modell des Bereichsteils (10) der Bogen-Werkstück-Interaktion des Schweißprozesses erhalten wurden, zur Verwendung bei der Bestimmung der Modellkomponente (13), die den Bereichsteil (6) des Bogens darstellt.

28. Vorrichtung nach Anspruch 21 oder 27, wobei das Mittel (23) eingerichtet ist, das theoretische Modell (24) zu verwenden, wobei der Bereichsteil (10) der Bogen-Werkstück-Interaktion des Schweißprozesses in eine erste Zone (66) nahe dem Werkstück und eine zweite Zone (67) nahe der Bogensäule aufgeteilt ist, um die Eigenschaften der Zonen durch verschiedene physikalische Untermodelle zu beschreiben.

29. Vorrichtung nach irgendeinem der Ansprüche 23, 24, 25 oder 27, wobei das Mittel (23) eingerichtet ist, die Modellkomponente zu verwenden, die mittels des physikalischen Modells bestimmt wurde, das den Bogen durch mindestens eine Gleichung beschreibt, unabhängig von der Erstreckung des Bogens im Raum.

30. Vorrichtung nach Anspruch 29, wobei das Mittel (23) eingerichtet ist, die Modellkomponente zu verwenden, die mittels des physikalischen Modells bestimmt wurde, das den Bogen durch die mindestens eine Gleichung beschreibt, nur von der Zeit abhängig.

31. Vorrichtung nach irgendeinem der Ansprüche 19 bis 30, wobei das Mittel (23) eingerichtet ist, das theoretische Modell (24) zu verwenden, wobei der Bereichsteil (9) der Bogensäule des Schweißprozesses getrennt durch eine der Modellkomponenten (13) in dem Modell (12) der elektrischen Schaltung dargestellt ist.

32. Vorrichtung nach irgendeinem der Ansprüche 19 bis 31, wobei das Mittel (23) eingerichtet ist, das theoretische Modell (24) zu verwenden, wobei der Drahtteil (5) des Schweißprozesses getrennt durch eine der Modellkomponenten (13) in dem Modell (12) der elektrischen Schaltung dargestellt ist.

33. Vorrichtung nach irgendeinem der Ansprüche 19 bis 32, wobei das Mittel (23) eingerichtet ist, das theoretische Modell (24) zu verwenden, wobei der Werkstückteil (7) des Schweißprozesses getrennt durch eine der Modellkomponenten (13) in dem Modell (12) der elektrischen Schaltung dargestellt ist.

**34.** Verwendung eines Verfahrens nach irgendeinem der Ansprüche 1 bis 18, um die Metalltropfenbildung in einem Bogenschweißvorgang für einen gegebenen Satz von Schweißparametern vorherzusagen.

**35.** Verwendung eines Verfahrens nach irgendeinem der Ansprüche 1 bis 18, um den Metalltransfermodus in einem Bogenschweißvorgang für einen gegebenen Satz von Schweißparametern vorherzusagen.

**36.** Verwendung eines Verfahrens nach irgendeinem der Ansprüche 1 bis 18, um mindestens einen Schweißparameterwert zu berechnen, der zum Erhalten eines bestimmten Metalltransfermodus in einem Schweißvorgang erforderlich ist.

**37.** Verwendung eines Verfahrens nach irgendeinem der Ansprüche 1 bis 18, um mindestens einen Vorgabeeinstellwert zu berechnen, der zum Einstellen einer automatischen Bogenschweißausrüstung vor dem Schweißen verwendet werden soll.

**38.** Computerprogrammprodukt, umfassend Codemittel und/oder Softwarecodeabschnitte, die einen Prozessor in die Lage versetzen, die Schritte von irgendeinem der Ansprüche 1 bis 18 auszuführen.

**39.** Computerprogrammprodukt nach Anspruch 38, das eine Vorrichtung nach irgendeinem der Ansprüche 19 bis 33 betreibt.

**40.** Computerprogrammprodukt nach Anspruch 38 oder 39, zumindest teilweise durch ein Netzwerk wie das Internet bereitgestellt.

**41.** Computerlesbares Medium, enthaltend ein Computerprogrammprodukt nach irgendeinem der Ansprüche 37 bis 39.


**Revendications**

**1.** Procédé de commande de l'équipement de soudage à l'arc utilisé dans une opération de soudage et réglable en faisant varier au moins une valeur de paramètre de soudage, comprenant les étapes consistant à :

- déterminer (30) ladite au moins une valeur de paramètre de soudage en utilisant (31) un modèle théorique du processus de soudage associé à l'opération de soudage,
- diviser (33) le processus de soudage en au moins deux parties distinctes, dont au moins une partie représente l'arc ou une portion de celui-ci, dans le modèle théorique,
- représenter (34) chacune desdites au moins deux parties de processus et le ou les paramètre(s) de soudage associé(s) à celles-ci par un composant de modèle,
- mettre (35) les composants de modèle et une source d'énergie de modèle dans un modèle de circuit électrique, et
- calculer (36) au moins une valeur de paramètre de modèle de circuit électrique liée audit au moins un paramètre de soudage provenant du modèle de circuit électrique.

**2.** Procédé selon la revendication 1, comprenant le fait de commander (32) le fonctionnement de l'équipement de soudage et le processus de soudage associé à celui-ci en utilisant ladite au moins une valeur de paramètre de soudage pour régler l'équipement de soudage.

**3.** Procédé selon la revendication 1 ou 2, comprenant les étapes consistant à :

- entrer (40) des données dans un modèle théorique représentant le processus de soudage,
- déterminer (41) au moins une valeur de paramètre de soudage du processus de soudage en utilisant (42) le modèle théorique et les données entrées, dans le but de simuler (43) le processus de soudage.

**4.** Procédé selon l'une quelconque des revendications 1 à 3, comprenant les étapes consistant à :

- entrer (50) des données dans un modèle théorique représentant le processus de soudage associé à l'opération de soudage,

- déterminer (51) au moins une propriété de la soudure liée à au moins un paramètre de soudage du processus de soudage en utilisant le modèle théorique et les données entrées, dans le but de prédire la qualité d'une soudure obtenue par l'opération de soudage à l'arc.

**5.** Procédé selon l'une quelconque des revendications 1 à 4, comprenant le fait de diviser le processus de soudage de telle manière que la partie de région d'interaction arc-fil (18) du processus de soudage est représentée séparément par l'un desdits composants de modèle (13) dans le modèle de circuit électrique (12).

**6.** Procédé selon l'une quelconque des revendications 1 à 5, comprenant le fait de diviser le processus de soudage de telle manière que la partie de région d'interaction arc-pièce (18) du processus de soudage est représentée séparément par l'un desdits composants de modèle (13) dans le modèle de circuit électrique (12).

**7.** Procédé selon l'une quelconque des revendications 1 à 4, comprenant le fait de :

- diviser le processus de soudage de telle manière que la partie de région d'interaction arc-fil (8) du processus de soudage est représentée séparément par l'un desdits composants de modèle (13) dans le modèle de circuit électrique (12), et/ou
- diviser le processus de soudage de telle manière que la partie de région d'interaction arc-pièce (10) du processus de soudage est représentée séparément par l'un desdits composants de modèle (13) dans le modèle de circuit électrique (12).

**8.** Procédé selon l'une quelconque des revendications 1 à 7, comprenant le fait de diviser le processus de soudage de telle manière que la partie de région d'arc (6) du processus de soudage est représentée séparément par l'un desdits composants de modèle (13) dans le modèle de circuit électrique (12).

**9.** Procédé selon la revendication 8, comprenant le fait de déterminer ledit composant de modèle représentant la partie de région d'arc (6) au moyen d'une information obtenue par des calculs à partir d'un modèle physique de la partie de région de colonne d'arc (9) du processus de soudage.

**10.** Procédé selon l'une quelconque des revendications 8 à 9, comprenant le fait de déterminer ledit composant de modèle représentant la partie de région d'arc (6) au moyen d'une information obtenue par des calculs à partir d'un modèle physique de la partie de région d'interaction arc-fil (8) du processus de soudage.

**11.** Procédé selon la revendication 5 ou 10, comprenant le fait de diviser la partie de région d'interaction arc-fil (8) du processus de soudage en une première zone (64) la plus proche du fil et une deuxième zone (65) la plus proche de la colonne d'arc pour décrire les propriétés des zones à travers différents sous-modèles physiques.

**12.** Procédé selon l'une quelconque des revendications 8 à 10, comprenant le fait de déterminer ledit composant de modèle représentant la partie de région d'arc (6) au moyen d'une information obtenue par des calculs à partir d'un modèle physique de la partie de région d'interaction arc-pièce (10) du processus de soudage.

**13.** Procédé selon la revendication 6 ou 12, comprenant le fait de diviser la partie de région d'interaction arc-pièce (10) du processus de soudage en une première zone (66) la plus proche de la pièce et une deuxième zone (67) la plus proche de la colonne d'arc pour décrire les propriétés des zones à travers différents sous-modèles physiques.

**14.** Procédé selon l'une quelconque des revendications 8, 9, 10 et 12, comprenant le fait de déterminer ledit composant de modèle représentant la partie de région d'arc (6) au moyen dudit modèle physique décrivant l'arc par au moins une équation indépendante de l'étendue de l'arc dans l'espace.

**15.** Procédé selon la revendication 14, comprenant le fait de déterminer ledit composant de modèle représentant la partie de région d'arc (6) au moyen dudit modèle physique décrivant l'arc par ladite au moins une équation dépendant seulement du temps.

**16.** Procédé selon l'une quelconque des revendications 1 à 15, comprenant le fait de diviser le processus de soudage de telle manière que la partie de région de colonne d'arc (9) du processus de soudage est représentée séparément par l'un desdits composants de modèle (13) dans le modèle de circuit électrique (12).

**17.** Procédé selon l'une quelconque des revendications 1 à 16, comprenant le fait de diviser le processus de soudage de telle manière que la partie de fil (5) du processus de soudage est représentée séparément par l'un desdits composants de modèle (13) dans le modèle de circuit électrique (12).

**18.** Procédé selon l'une quelconque des revendications 1 à 17, **caractérisé en ce qu'**il comprend le fait de diviser le processus de soudage de telle manière que la partie de pièce (7) du processus de soudage est représentée séparément par l'un desdits composants de modèle (13) dans le modèle de circuit électrique (12).

**19.** Dispositif comprenant un équipement de soudage à l'arc (21) utilisé dans une opération de soudage et réglable en faisant varier au moins un paramètre de soudage et un système (22) pour commander le fonctionnement de l'équipement de soudage à l'arc, ledit système de commande comprenant un moyen (23) adapté pour déterminer la valeur dudit au moins un paramètre de soudage en utilisant un modèle théorique (24) du processus de soudage, et un élément (25) adapté pour commander le fonctionnement de l'équipement de soudage et le processus de soudage associé à celui-ci en utilisant ladite au moins une valeur de paramètre de soudage pour régler l'équipement de soudage, **caractérisé en ce que** le moyen (23) est adapté pour utiliser ledit modèle théorique (24) comprenant au moins deux parties distinctes (26, 27), au moins une partie représentant l'arc ou une portion de celui-ci, correspondant à différentes parties du processus de soudage, chaque partie de modèle étant représentée par un composant de modèle (13), lesdits composants de modèle ainsi qu'une source d'énergie de modèle (14) étant inclus dans un modèle de circuit électrique (12) et **en ce que** ledit moyen (23) est adapté pour calculer au moins une valeur de paramètre de modèle de circuit électrique liée audit au moins un paramètre de soudage du modèle de circuit électrique pour ladite commande effectuée par ledit élément (25).

**20.** Dispositif selon la revendication 19, dans lequel le moyen (23) est adapté pour utiliser ledit modèle théorique (24) où la partie de région d'interaction arc-fil (8) du processus de soudage est représentée séparément par l'un desdits composants de modèle (13) dans le modèle de circuit électrique (12).

**21.** Dispositif selon l'une quelconque des revendications 18 à 20, dans lequel le moyen (23) est adapté pour utiliser ledit modèle théorique (24) où la partie de région d'interaction arc-pièce (10) du processus de soudage est représentée séparément par l'un desdits composants de modèle (13) dans le modèle de circuit électrique (12).

**22.** Dispositif selon la revendication 19, dans lequel le moyen (23) est adapté pour utiliser ledit modèle théorique (24) où la partie de région d'interaction arc-fil (8) du processus de soudage est représentée séparément par l'un desdits composants de modèle (13) dans le modèle de circuit électrique (12) et/ou la partie de région d'interaction arc-pièce (10) du processus de soudage est représentée séparément par l'un desdits composants de modèle (13) dans le modèle de circuit électrique (12).

**23.** Dispositif selon l'une quelconque des revendications 19 à 22, dans lequel le moyen (23) est adapté pour utiliser ledit modèle théorique (24) où la partie de région d'arc (6) du processus de soudage est représentée séparément par l'un desdits composants de modèle (13) dans le modèle de circuit électrique (12).

**24.** Dispositif selon la revendication 23, dans lequel le moyen (23) est adapté pour utiliser ledit modèle théorique (24) au moyen d'une information obtenue par des calculs à partir d'un modèle physique de la partie de région de colonne d'arc (9) du processus de soudage à utiliser dans la détermination dudit composant de modèle (13) représentant la partie de région d'arc (6).

**25.** Dispositif selon l'une quelconque des revendications 23 à 24, dans lequel le moyen (23) est adapté pour utiliser ledit modèle théorique (24) au moyen d'une information obtenue par des calculs à partir d'un modèle physique de la partie de région d'interaction arc-fil (8) du processus de soudage à utiliser dans la détermination dudit composant de modèle (13) représentant la partie de région d'arc (6).

**26.** Dispositif selon la revendication 20 ou 25, dans lequel le moyen (23) est adapté pour utiliser ledit modèle théorique (24) où la partie de région d'interaction arc-fil (8) du processus de soudage est divisée en une première zone (64) la plus proche du fil et une deuxième zone (65) la plus proche de la colonne d'arc pour décrire les propriétés des zones à travers différents sous-modèles physiques.

**27.** Dispositif selon l'une quelconque des revendications 23 à 25, dans lequel le moyen (23) est adapté pour utiliser ledit modèle théorique (24) au moyen d'une information obtenue par des calculs à partir d'un modèle physique de la partie de région d'interaction arc-pièce (10) du processus de soudage à utiliser dans la détermination dudit composant de modèle (13) représentant la partie de région d'arc (6).

28. Dispositif selon la revendication 21 ou 27, dans lequel le moyen (23) est adapté pour utiliser ledit modèle théorique (24) où la partie de région d'interaction arc-pièce (10) du processus de soudage est divisée en une première zone (66) la plus proche de la pièce et une deuxième zone (67) la plus proche de la colonne d'arc pour décrire les propriétés des zones à travers différents sous-modèles physiques.

29. Dispositif selon l'une quelconque des revendications 23, 24, 25 et 27, dans lequel le moyen (23) est adapté pour utiliser ledit composant de modèle déterminé au moyen dudit modèle physique décrivant l'arc par au moins une équation indépendante de l'étendue de l'arc dans l'espace.

30. Dispositif selon la revendication 29, dans lequel le moyen (23) est adapté pour utiliser ledit composant de modèle déterminé au moyen dudit modèle physique décrivant l'arc par ladite au moins une équation dépendant seulement du temps.

31. Dispositif selon l'une quelconque des revendications 19 à 30, dans lequel le moyen (23) est adapté pour utiliser ledit modèle théorique (24) où la partie de région de colonne d'arc (9) du processus de soudage est représentée séparément par l'un desdits composants de modèle (13) dans le modèle de circuit électrique (12).

32. Dispositif selon l'une quelconque des revendications 19 à 31, dans lequel le moyen (23) est adapté pour utiliser ledit modèle théorique (24) où la partie de fil (5) du processus de soudage est représentée séparément par l'un desdits composants de modèle (13) dans le modèle de circuit électrique (12).

33. Dispositif selon l'une quelconque des revendications 19 à 32, dans lequel le moyen (23) est adapté pour utiliser ledit modèle théorique (24) où la partie de pièce (7) du processus de soudage est représentée séparément par l'un desdits composants de modèle (13) dans le modèle de circuit électrique (12).

34. Utilisation d'un procédé selon l'une quelconque des revendications 1 à 18 pour prédire la formation de gouttelettes de métal dans une opération de soudage à l'arc pour un ensemble de paramètres de soudage donné.

35. Utilisation d'un procédé selon l'une quelconque des revendications 1 à 18 pour prédire le mode de transfert de métal dans une opération de soudage à l'arc pour un ensemble de paramètres de soudage donné.

36. Utilisation d'un procédé selon l'une quelconque des revendications 1 à 18 pour calculer au moins une valeur de paramètre de soudage nécessaire pour obtenir un mode de transfert de métal particulier dans une opération de soudage.

37. Utilisation d'un procédé selon l'une quelconque des revendications 1 à 18 pour calculer au moins une valeur de réglage par défaut à utiliser pour régler un équipement de soudage à l'arc automatique avant de souder.

38. Produit de programme informatique comprenant un moyen formant code et/ou des parties de code logiciel permettant à un processeur d'exécuter les étapes de l'une quelconque des revendications 1 à 18.

39. Produit de programme informatique selon la revendication 38 faisant fonctionner un dispositif selon l'une quelconque des revendications 19 à 33.

40. Produit de programme informatique selon la revendication 38 ou 39, fourni au moins partiellement par l'intermédiaire d'un réseau tel qu'Internet.

41. Support informatique contenant un produit de programme informatique selon l'une quelconque des revendications 37 à 39.

Fig. 1

Fig. 2

CONTROL

SIM

QUALITY

Fig. 4

14

12

$R_w$   13   $R_a$   $R_{wp}$

$R_0$   $L_0$

**Fig 3**

| Wire | Arc | Work Piece |

Arc-Wire Interaction

Arc-WP Interaction

Shielding Gas

Electrical Circuit

Welding Speed

Quality

**Fig 8**

63

62

61

60

**Fig 9**

Fig. 5

Fig. 6

Fig. 7

**Fig. 10**

**Fig. 11**

$$Q_{rad}$$

$$J_e E \longrightarrow \boxed{T_e} \xrightarrow{2/3 \delta_e \nu_e k(T_e - T_h)} \boxed{T_h} \longleftarrow J_i E$$

| Thermal conduction + Ionization | | Thermal conduction |

**Fig. 12**

**Indirect Weld Parameters (IWPs)**

Current
Voltage
Travel speed
Electrode feed rate
Electrode extension
Travel angle
Focused spot size
Depth of focus
Arc duration
Arc repetition rate
Beam power
...

| Material Parameters (MPs) Melting point Thermal conductivity Thermal diffusivity Joint type ... |

**Direct Weld Parameters (DWPs)**

Geometry:
  Bead width
  Penetration
...
Mechanical properties:
  Ductility
  Strength
...
Microstructure:
  Grain size
  Phase
...
Discontinuities:
  Porosity
  Incomplete fusion
...

**Fig. 13**

$$\textcircled{C} \quad W_C^{(1)} \qquad W_{Mn}^{(1)} \quad \textcircled{Mn} \qquad W_{Ni}^{(1)} \quad \textcircled{Ni}$$

$$\theta^{(1)} \longrightarrow$$

$$h = \tanh(\Sigma w_j^{(1)} x_j + \theta^{(1)})$$

$$y = w^{(2)} h + \theta^{(2)}$$

$$\textcircled{B_s} \, y$$

**Fig. 15**

- wire feed rate $W_f$
- arc length L
- heat transfer coef. h
- thermal conductivity k
- torch angle $\theta$
- impact of droplets

...

- throat size of weld t3
- penetration $\delta_i$

*Fig. 14*

39

*Fig. 16*

EP 1 372 896 B1

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0930125 A
- WO 0102125 A

- US 6133545 A